# EUROPÄISCHE PATENTSCHRIFT

(11) **EP 2 527 173 B1**
(45) Veröffentlichungstag und Bekanntmachung des Hinweises auf die Patenterteilung: **08.10.2014**
(21) Anmeldenummer: 12003836.9
(22) Anmeldetag: 15.05.2012
(51) Int. Cl.: B60H 1/00

(54) **Dachklimagerät für ein Fahrzeug**
Roof air conditioning unit for a vehicle
Appareil de climatisation plafonnier pour un véhicule

(30) Priorität: 25.05.2011 DE 102011102343
(43) Veröffentlichungstag der Anmeldung: 28.11.2012
(73) Patentinhaber: Truma Gerätetechnik GmbH & Co. KG, 85640 Putzbrunn (DE)
(72) Erfinder: Mini, Uwe, 85625 Glonn (DE); Schudlich, Claudia, 85604 Zorneding (DE); Laging, Johannes, 81829 München (DE); Hiller, Werner, 81827 München (DE)
(74) Vertreter: Prinz & Partner

(56) Entgegenhaltungen:
- WO-A1-2007/042065
- DE-A1- 10 239 562
- US-A- 4 043 143

## Beschreibung

Die Erfindung betrifft ein Klimagerät, das insbesondere als Dachklimagerät bei einem Caravan oder Reisemobil genutzt werden kann.

Klimageräte für Fahrzeuge wie Reisemobile oder Caravans werden oft als komplette Einheiten auf der Oberseite des Fahrzeugs angeordnet. Solche Dachklimageräte weisen im Allgemeinen einen vollständigen Kältekreislauf einschließlich Kompressor, Verdampfer und Verflüssiger auf.

In einem Anwendungsfall kann der als Wärmeüberträger dienende Verdampfer von einem aus dem Innenraum des Fahrzeugs angesaugten Luftstrom durchströmt werden, wobei der Luftstrom durch den Verdampfer gekühlt und anschließend als Kaltluftstrom in das Innere des Fahrzeugs zurückgeleitet werden kann. Ein in dem Kältekreislauf ebenfalls angeordneter weiterer Wärmeüberträger kann als Verflüssiger dienen und durch Umgebungsluft aus einer Umgebung des Fahrzeugs gekühlt werden.

In einem alternativen Anwendungsfall kann der Kältekreislauf umgekehrt werden und der Innenraumluftstrom durch den Wärmeüberträger, der nun als Verflüssiger betrieben wird, erwärmt werden. In diesem Anwendungsfall kann der weitere Wärmeüberträger als Verdampfer betrieben werden, der die Umgebungsluft kühlt.

Die US 4,043,143 offenbart ein Dachklimagerät für Züge mit einem von einem Lufteinlass wegführenden Lufteinlasskanal, einer von dem Lufteinlass stromabwärts angeordneten Luftfördervorrichtung, die Luft in zwei in entgegengesetzte Richtungen gerichtete Luftauslasskanäle befördert. In den Lufteinlasskanälen sind Wärmeübertragungsvorrichtungen angeordnet, durch die die durch den Lufteinlasskanal geführte Luft hindurch geleitet wird. Zudem sind der Lufteinlass und die Luftauslässe in eine Umgebung außerhalb eines zu klimatisierenden Raums geöffnet.

Dachklimaanlagen werden meist im Stand, beispielsweise auf einem Campingplatz oder Rastplatz, betrieben. Hierbei können Betriebsgeräusche entstehen, die sowohl für die Fahrzeuginsassen als auch für benachbarte Anlieger störend sein können. Aus diesem Grund wurde bereits auf einigen Wagenstandplätzen der Betrieb von Dachklimageräten zumindest zeitweise untersagt.

Für die Geräuschentwicklung sind neben den Geräuschen, die durch in dem Kältekreislauf angeordnete Aggregate erzeugt werden, insbesondere die im Dachklimagerät geförderten und durch das Dachklimagerät geleiteten Luftströme maßgeblich, und zwar sowohl der zu temperierende Innenraumluftstrom als auch der Umgebungsluftstrom.

Der Erfindung liegt die Aufgabe zugrunde, ein Dachklimagerät anzugeben, bei dem die Geräuschentwicklung und Geräuschemission verringert ist.

Die Aufgabe wird durch ein Klimagerät gemäß Patentanspruch 1 gelöst. Weiterentwicklungen sind den abhängigen Patentansprüchen zu entnehmen.

Ein Klimagerät weist einen von einem Lufteinlass weg führenden Lufteinlasskanal, eine stromab vom Lufteinlasskanal angeordnete Luftfördervorrichtung, einen stromab von der Luftfördervorrichtung angeordneten Verzweigungsbereich zu wenigstens zwei zu jeweils einem Luftauslass führenden Luftauslasskanälen und eine in dem Lufteinlasskanal und/oder in den Luftauslasskanälen angeordnete Wärmeübertragungsvorrichtung, durch die die durch den Lufteinlasskanal und/oder durch die Luftauslasskanäle geführte Luft hindurch geleitet wird, auf. Die Richtungen der durch die jeweiligen Luftauslässe austretenden Luftströme sind dabei unterschiedlich orientiert. Der Lufteinlass und die Luftauslässe sind in eine Umgebung außerhalb eines zu klimatisierenden Raums geöffnet.

Weiterhin in dem Verzweigungsbereich eine Luftstromteilungsvorrichtung angeordnet, wobei die Luftstromteilungsvorrichtung eine einen ersten der wenigstens zwei Luftauslasskanäle begrenzende erste Flanke und eine einen zweiten der wenigstens zwei Luftauslasskanäle begrenzende, an einer ersten Flanke in einem Scheitelbereich angrenzende zweite Flanke aufweist.

Die Aufgabe wird durch ein Klimagerät gemäß Patentanspruch 1 gelöst. Weiterentwicklungen sind den abhängigen Patentansprüchen zu entnehmen.

Ein Klimagerät weist einen von einem Lufteinlass weg führenden Lufteinlasskanal, eine stromab vom Lufteinlasskanal angeordnete Luftfördervorrichtung, einen stromab von der Luftfördervorrichtung angeordneten Verzweigungsbereich zu wenigstens zwei zu jeweils einem Luftauslass führenden Luftauslasskanälen und eine in dem Lufteinlasskanal und/oder in den Luftauslasskanälen angeordnete Wärmeübertragungsvorrichtung, durch die die durch den Lufteinlasskanal und/oder durch die Luftauslasskanäle geführte Luft hindurch geleitet wird, auf. Die Richtungen der durch die jeweiligen Luftauslässe austretenden Luftströme sind dabei unterschiedlich orientiert. Der Lufteinlass und die Luftauslässe sind in eine Umgebung außerhalb eines zu klimatisierenden Raums geöffnet.

Alternativ können der Lufteinlass und die Luftauslässe auch in den zu klimatisierenden Raum führen. Weiterhin ist es möglich, mehrere Luftdurchleitungswege durch das Klimagerät vorzusehen. Bei einem ersten Luftdurchleitungsweg können der Lufteinlass und die Luftauslässe in eine äußere Umgebung des zu klimatisierenden Raums führen und Umgebungsluft durch das Klimagerät hindurchleiten. Bei einem weiteren Luftdurchleitungsweg können ein weiterer Lufteinlass und weitere Luftauslässe in den zu klimatisierenden Raum selbst führen und die zu klimatisierende Luft durch das Klimagerät hindurchleiten. Der weitere Lufteinlass und weitere Luftauslässe können ebenso wie der Lufteinlass und die Luftauslässe die im Folgenden beschriebenen Merkmale aufweisen.

Durch die Luftfördervorrichtung, die beispielsweise ein oder mehrere Lüfterräder mit Blättern bzw. Schaufeln zur Luftförderung aufweisen kann, wird am Lufteinlasskanal ein Sog erzeugt, der durch den Lufteinlass, beispielsweise einen Lüftungsschlitz, eine Lüftungsöffnung und/oder ein Lüftungsgitter, Luft aus einer Umgebung des Klimageräts ansaugt. Die Luft wird durch den Lufteinlasskanal zur Luftfördervorrichtung und von dort stromab über den Verzweigungsbereich in die wenigstens zwei Luftauslasskanäle verteilt, durch die die Luft jeweils anteilig über die jeweiligen Luftauslässe, beispielsweise durch Luftauslassschlitze, Luftauslass-öffnungen oder Luftauslassgitter, in die Umgebung des Klimageräts abgegeben wird.

Durch die in dem Lufteinlasskanal und/oder in den Luftauslasskanälen angeordnete Wärmeübertragungsvorrichtung wird bei diesem Hindurchleiten Wärme an die Luft abgegeben oder der Luft Wärme entzogen. Die so erwärmte bzw. gekühlte Luft wird dann in die Umgebung des Klimageräts ausgeblasen.

Der Lufteinlass und die Luftauslässe können beispielsweise in einen Innenraum eines durch das Klimagerät zu temperierenden Fahrzeugs münden. In diesem Fall kann das Klimagerät die durch es hindurchgeleitete Luft beispielsweise gemäß einer Bedienervorgabe temperieren und so den Innenraum des Fahrzeugs heizen bzw. kühlen.

Der Lufteinlass und die Luftauslässe können jedoch auch in eine äußere Umgebung des Fahrzeugs, an dem das Klimagerät beispielsweise als Dachklimagerät angeordnet ist, münden und somit einen Abtransport oder eine Zufuhr von Wärme aus der Umgebung des Fahrzeugs zu dem Kältekreislauf ermöglichen.

Dementsprechend kann die Wärmeübertragungsvorrichtung je nach Anwendungsfall die Umgebungsluft erwärmen oder kühlen.

Die Wärmeübertragungsvorrichtung kann beispielsweise Teil eines in dem Klimagerät angeordneten, geschlossenen Kältekreislaufs mit Kompressor, Verdampfer und Verflüssiger sein. Je nach Anwendungsfall und/oder Ausrichtung des Lufteinlasses und der Luftauslässe kann die Wärmeübertragungsvorrichtung den Verdampfer oder den Verflüssiger des Kältekreislaufs aufweisen. Weiterhin ist es möglich, den Kältekreislauf in seiner Funktion derart umkehrbar zu gestalten, dass die Wärmeübertragungsvorrichtung je nach Anwendungsfall die Funktion des Verdampfers bzw. des Verflüssigers in dem Kältekreislauf übernehmen kann.

Alternativ kann die Wärmeübertragungsvorrichtung auch eine anders geartete Heiz- oder Kühlungsvorrichtung zum Erwärmen oder Abkühlen der durch sie hindurchgeleiteten Luft aufweisen, beispielsweise eine elektrisch betriebene Heizung.

In dem Klimagerät können beispielsweise zwei separate Luftführungseinrichtungen, eine Innenraumluftführungseinrichtung und eine Umgebungsluftführungseinrichtung, zum Hindurchleiten zweier separater Luftströme, eines Innenraumluftstroms bzw. eines Umgebungsluftstroms, vorgesehen sein. Der Innenraumluftstrom und der Umgebungsluftstrom können derart voneinander getrennt sein, dass kein Luftaustausch möglich ist.

Die Innenraumluftführungseinrichtung, die Umgebungsluftführungseinrichtung oder beide Luftführungseinrichtungen können jeweils einen Lufteinlass, einen wicklung an der Luftfördervorrichtung, beispielsweise dem Lüfterrad, besser im Gerät eingeschlossen bzw. gekapselt. Störgeräusche der Luftfördervorrichtung beispielsweise durch einen Drehklang des Lüfterrads oder durch Verwirbelungen an den Schaufeln werden daher nur abgeschwächt in die Umgebung des Klimageräts ausgeleitet.

In einer weiteren Ausführungsform weist wenigstens einer der Luftauslasskanäle senkrecht zu einer Hauptfließrichtung eines darin geführten Luftstroms eine sich stromab vergrößernde Querschnittsfläche auf. Der Querschnitt des Luftauslasskanals vergrößert sich folglich zum Luftauslass hin. Mit anderen Worten ist der Luftauslasskanal als Diffusor gestaltet.

Durch diese Gestaltung als Diffusor kann eine Fließgeschwindigkeit der Luft in dem Luftauslasskanal stromab, d.h. zum Luftauslass hin, verlangsamt werden. Hierdurch kann ein langsameres Auftreffen des Luftstroms bzw. der Luftpartikel an einem Auslassgitter erreicht werden. Hierdurch können Geräusche, die beim Hindurchleiten der Luft durch den jeweiligen Luftauslass auftreten, weiter reduziert werden.

Durch die Teilung des durch die Luftfördervorrichtung ausgeblasenen Luftstroms an dem Scheitelbereich der Luftstromteilungsvorrichtung und durch die Weiterleitung der anteiligen Teilluftströme entlang der ersten Flanke zu einem ersten der wenigstens zwei Luftauslasskanäle bzw. entlang der zweiten Flanke zu einem zweiten der wenigstens zwei Luftauslasskanäle können lokale Strömungsorientierungen der Luftpartikel an den Flanken ausgerichtet werden. Die Flanken sind im Umkehrschluss an der eintretenden Luftströmung ausgerichtet. Hierdurch werden Staudruck und Rückwirbelgebiete reduziert.

In einer Variante dieser Ausführungsform sind die erste Flanke, die zweite Flanke und der Scheitelbereich derart geformt, dass ein jeweils daran entlang geführter Luftstrom maximale Geschwindigkeiten im Querschnitt unterhalb eines vorgegebenen Grenzwerts aufweist.

Dies kann beispielsweise durch eine Berechnung der lokalen Strömungsgeschwindigkeiten in einer Strömungssimulation in einem geeigneten mathematischen Simulationswerkzeug nachgewiesen werden. Durch ein geeignetes numerisches Optimierungsverfahren können nach Vorgabe des Grenzwerts geeignete Ausformungen der ersten und zweiten Flanke und des Scheitelbereichs bestimmt werden. Beispielsweise können Querschnitte der ersten und zweiten Flanke in einer Schnittebene längs zu einer Fließrichtung der Teilluftströme derart bestimmt werden, dass die maximalen Geschwindigkeiten der Teilluftströme beispielsweise im Bereich der Flanken der Luftstromteilungsvorrichtung und/oder entlang der Wände der Luftauslasskanäle minimiert und in ihrer Orientierung optimiert werden.

In einer weiteren Ausführungsform weist die Luftfördervorrichtung ein Lüfterrad, beispielsweise wie oben bereits beschrieben, auf. In dieser Ausführungsform kann die erste Flanke in einer Laufrichtung des Lüfterrades hinter dem Scheitelbereich angeordnet und dem Lüfterrad im Wesentlichen tangential zugewandt sein und die zweite Flanke von dem Lüfterrad im Wesentlichen tangential wegführend angeordnet sein. Die erste Flanke kann dabei zwar tangential, aber insbesondere parallel zu einer virtuellen Tangente zu dem Lüfterrad verlaufen.

Als Lüfterrad kann beispielsweise ein Trommelläufer mit zum Beispiel 48 Schaufeln verwendet werden. Ein derartiger Trommelläufer verursacht als Drehklang ein rauschendes lasskanäle ausgeblasen, so sind in den wenigstens zwei Luftauslasskanälen wegen der geringeren benötigten Einzelquerschnitte und des zugleich in Summe der Luftauslasskanäle vergrößerten Gesamtquerschnittes sowie wegen der verbesserten Ausrichtung der Luftauslasskanalwandungen in Bezug auf die eintretende Strömung zum Einen insgesamt reduzierte Strömungsgeschwindigkeiten der durch die wenigstens zwei Luftauslasskanäle geleiteten Luftpartikel (reduzierte Maximalgeschwindigkeit innerhalb des Kanals) und zum Anderen wesentlich geringere Differenzgeschwindigkeiten (reduzierte Differenzen der an verschiedenen Orten innerhalb eines der wenigstens zwei Luftauslasskanäle beobachteten Strömungsgeschwindigkeiten) zu beobachten. Verwirbelungen und Störgeräusche beim Auftreffen am Luftauslass werden dadurch deutlich reduziert. Insgesamt wird daher eine wesentlich geringere Geräuschentwicklung und -emission erreicht.

Weiterhin wird durch die verringerten Einzelquerschnitte der beiden Luftauslasskanäle im Vergleich zu einem einzigen Luftauslasskanal mit großem Querschnitt eine Geräuschentwicklung an der Luftfördervorrichtung, beispielsweise dem Lüfterrad, besser im Gerät eingeschlossen bzw. gekapselt. Störgeräusche der Luftfördervorrichtung beispielsweise durch einen Drehklang des Lüfterrads oder durch Verwirbelungen an den Schaufeln werden daher nur abgeschwächt in die Umgebung des Klimageräts ausgeleitet.

In einer weiteren Ausführungsform weist wenigstens einer der Luftauslasskanäle senkrecht zu einer Hauptfließrichtung eines darin geführten Luftstroms eine sich stromab vergrößernde Querschnittsfläche auf. Der Querschnitt des Luftauslasskanals vergrößert sich folglich zum Luftauslass hin. Mit anderen Worten ist der Luftauslasskanal als Diffusor gestaltet.

Durch diese Gestaltung als Diffusor kann eine Fließgeschwindigkeit der Luft in dem Luftauslasskanal stromab, d.h. zum Luftauslass hin, verlangsamt werden. Hierdurch kann ein langsameres Auftreffen des Luftstroms bzw. der Luftpartikel an einem Auslassgitter erreicht werden. Hierdurch können Geräusche, die beim Hindurchleiten der Luft durch den jeweiligen Luftauslass auftreten, weiter reduziert werden.

In einer Ausführungsform ist in dem Verzweigungsbereich eine Luftstromteilungsvorrichtung angeordnet, wobei die Luftstromteilungsvorrichtung eine einen ersten der wenigstens zwei Luftauslasskanäle begrenzende erste Flanke und eine einen zweiten der wenigstens zwei Luftauslasskanäle begrenzende, an einer ersten Flanke in einem Scheitelbereich angrenzende zweite Flanke aufweist.

Durch die Teilung des durch die Luftfördervorrichtung ausgeblasenen Luftstroms an dem Scheitelbereich der Luftstromteilungsvorrichtung und durch die Weiterleitung der anteiligen Teilluftströme entlang der ersten Flanke zu einem ersten der wenigstens zwei Luftauslasskanäle bzw. entlang der zweiten Flanke zu einem zweiten der wenigstens zwei Luftauslasskanäle können lokale Strömungsorientierungen der Luftpartikel an den Flanken ausgerichtet werden. Die Flanken sind im Umkehrschluss an der eintretenden Luftströmung ausgerichtet. Hierdurch werden Staudruck und Rückwirbelgebiete reduziert.

In einer Variante dieser Ausführungsform sind die erste Flanke, die zweite Flanke und der Scheitelbereich derart geformt, dass ein jeweils daran entlang geführter Luftstrom maximale Geschwindigkeiten im Querschnitt unterhalb eines vorgegebenen Grenzwerts aufweist.

Dies kann beispielsweise durch eine Berechnung der lokalen Strömungsgeschwindigkeiten in einer Strömungssimulation in einem geeigneten mathematischen Simulationswerkzeug nachgewiesen werden. Durch ein geeignetes numerisches Optimierungsverfahren können nach Vorgabe des Grenzwerts geeignete Ausformungen der ersten und zweiten Flanke und des Scheitelbereichs bestimmt werden. Beispielsweise können Querschnitte der ersten und zweiten Flanke in einer Schnittebene längs zu einer Fließrichtung der Teilluftströme derart bestimmt werden, dass die maximalen Geschwindigkeiten der Teilluftströme beispielsweise im Bereich der Flanken der Luftstromteilungsvorrichtung und/oder entlang der Wände der Luftauslasskanäle minimiert und in ihrer Orientierung optimiert werden.

In einer weiteren Ausführungsform weist die Luftfördervorrichtung ein Lüfterrad, beispielsweise wie oben bereits beschrieben, auf. In dieser Ausführungsform kann die erste Flanke in einer Laufrichtung des Lüfterrades hinter dem Scheitelbereich angeordnet und dem Lüfterrad im Wesentlichen tangential zugewandt sein und die zweite Flanke von dem Lüfterrad im Wesentlichen tangential wegführend angeordnet sein. Die erste Flanke kann dabei zwar tangential, aber insbesondere parallel zu einer virtuellen Tangente zu dem Lüfterrad verlaufen.

Als Lüfterrad kann beispielsweise ein Trommelläufer mit zum Beispiel 48 Schaufeln verwendet werden. Ein derartiger Trommelläufer verursacht als Drehklang ein rauschendes Geräusch, welches für das menschliche Ohr weniger störend und durch die weiteren genannten Maßnahmen zur Reduzierung der Schallemissionen gut dämmbar ist.

Durch eine derartige Anordnung der ersten Flanke, der zweiten Flanke und des Scheitelbereichs zu dem Lüfterrad kann die Luftstromteilungsvorrichtung in Form eines tangential zum Lüfterrad angeordneten Keils angegeben werden. Eine derartige Ausrichtung der keilförmigen Luftstromteilungsvorrichtung zum Lüfterrad vermeidet Verwirbelungen des durch das Lüfterrad ausgeblasenen Luftstroms beispielsweise im Scheitelbereich.

In einer weiteren Ausführungsform begrenzt die erste Flanke die Luftstromteilungsvorrichtung konvex und die zweite Flanke die Luftstromteilungsvorrichtung konkav. In dieser Ausführungsform kann der Scheitelbereich gerundet sein.

Die Rundung und die konvexe bzw. konkave Führung der von der Luftfördervorrichtung ausgeblasenen Teilluftströme verhindern Rückströmgebiete in einer Umgebung der Luftstromteilungsvorrichtung, in denen Verwirbelungen der daran vorbeigeführten Luft auftreten können, welche beispielsweise zu Turbulenz- bzw. Wirbelgeräuschen führen könnten. Hierdurch wird die Geräuschentwicklung bei der Teilung des Luftstroms und bei der Einleitung in die Luftauslasskanäle weiter vermindert.

In einer weiteren Ausführungsform ist eine das Lüfterrad umgebende Umwandung vorgesehen, wobei ein Abstand der Umwandung von einer radialen Außenkante des Lüfterrads in einer Laufrichtung des Lüfterrads zunimmt.

Ein zwischen der Umwandung und der radialen Außenkante des Lüfterrads gebildeter Zwischenraum nimmt daher in Laufrichtung des Lüfterrads zu. Durch diese Ausgestaltung wird ein durch die Umwandung gebildetes, das Lüfterrad beispielsweise in einem Winkel von mehr als 135° umgebendes Gehäuse bzw. eine zum Lüfterrad offene, aber in Richtung des Ausblasens geschlossene Luftstromführungsschiene gebildet, wobei das Gehäuse bzw. die Luftstromführungsschiene in der Laufrichtung des Lüfterrads einen immer größer werdenden radialen Abstand zum Lüfterrad bzw. zur Rotationsachse des Lüfterrads aufweist. Die radiale Außenkante des Lüfterrads wird dabei durch die von der Rotationsachse stromab liegenden Aussenkanten der Schaufeln des Lüfterrades bzw. deren einhüllende Rotationsfläche gebildet.

Die Umwandung ist daher zumindest in einem Winkelbereich um die Rotationsachse des Lüfterrads in der Art einer Umwandung eines Schneckenhauses vorgesehen. Der durch das Lüfterrad geförderte Luftstrom kann daher entlang der Umwandung mit zunehmendem Volumen geführt und wie in einem Diffusor verlangsamt bzw. gebremst werden. Die Luftführungen einer derartigen, im Folgenden auch als Diffusorschnecke bezeichneten Luftstromführungsschiene am Lüfterrad ermöglicht es, ein hohes Fördervolumen an Luft bei gleichzeitiger Senkung der Spitzengeschwindigkeiten bereits an der Umwandung des Lüfterrads zu erreichen und somit den Luftstrom schon vor dem Auftreffen an der Luftstromteilungsvorrichtung abzubremsen. Folglich tritt eine geringere Geräuschentwicklung bei der Einleitung in die wenigstens zwei Luftauslasskanäle auf.

In einer Variante ist eine das Lüfterrad teilweise umgebende Umwandung vorgesehen, wobei ein Abstand der Umwandung von einer radialen Außenkante des Lüfterrads in der Laufrichtung des Lüfterrads im Wesentlichen konstant ist und eine längs zu der Rotationsachse des Lüfterrads gemessene Höhe eines zwischen der Umwandung und dem Lüfterrad befindlichen Freiraums in der Laufrichtung des Lüfterrads zunimmt.

Die parallel bzw. entlang der Rotationsachse des Lüfterrads zu messende Höhe des zwischen der Umwandung und dem Lüfterrad befindlichen Freiraums nimmt in dieser Variante in der Laufrichtung des Lüfterrads zu. Die Umwandung umschließt das Lüfterrad in dieser Variante folglich in einen vorgegebenen Winkelbereich von beispielsweise mehr als 135° mit gleichbleibendem Abstand von der Rotationsachse des Lüfterrads und bildet daher ein in dem Winkelbereich kreisförmiges Gehäuse. Die zunehmende Höhe kann auf die durch das Lüfterrad geförderte Luft als Diffusor wirken und den in Richtung der Luftauslasskanäle beförderten Luftstrom daher vor der Einleitung in die Luftauslasskanäle abbremsen. Folglich kann eine Geräuschentwicklung bei der Einleitung in die Luftauslasskanäle weiter reduziert werden.

In einer weiteren Ausführungsform ist in dem zwischen der Umwandung und dem Lüfterrad befindlichen Freiraum ein das Lüfterrad in einem Winkelbereich um die Rotationsachse des Lüfterrads umgebender Trennsteg vorgesehen, wobei der Trennsteg den von dem Lüfterrad ausgeblasenen Luftstrom aufteilt und anteilig jeweils einem der Luftauslasskanäle zuführt. Der Winkelbereich kann beispielsweise wenigstens 45° umfassen.

Durch die frühzeitige Teilung des Luftstroms durch den Trennsteg und die zusätzliche Führung der Teilluftströme am Trennsteg entlang kann eine vergleichmäßigte Fließgeschwindigkeit der beiden Teilluftströme beim Einströmen in die Luftauslasskanäle erreicht werden. Hierdurch wird eine Geräuschentwicklung weiter reduziert.

In einer Ausführungsform kann sich der Trennsteg zwischen dem Lüfterrad und der Umwandung in einer Richtung längs zu der Rotationsachse des Lüfterrads im Wesentlichen über eine längs der Rotationsachse des Lüfterrades gemessene Höhe des Lüfterrades erstrecken. Die beiden Teilluftströme können dann mit verlangsamter, gleichmäßiger Geschwindigkeit in die beispielsweise radial versetzten wenigstens zwei Luftauslasskanäle eingeleitet werden. Hierdurch wird die Geräuschentwicklung beim Einleiten weiter vermindert.

In einer weiteren Ausführungsform kann sich der Trennsteg in einer Ebene senkrecht zur Rotationsachse des Lüfterrads erstrecken, wobei die wenigstens zwei Luftauslasskanäle axial entlang der Rotationsachse des Lüfterrads zueinander versetzt angeordnet sein können. In dieser Ausführungsform trennt der Trennsteg den das Lüfterrad umgebenden Freiraum in einer Ebene senkrecht zur Rotationsachse. Die beiden Teilluftströme können so mit verlangsamter, gleichmäßiger Geschwindigkeit in die Luftauslasskanäle eingeleitet werden, die beispielsweise mit axialem Versatz entlang der Rotationsachse des Lüfterrads angeordnet sein können. Hierdurch wird die Geräuschentwicklung beim Einleiten weiter vermindert.

In einer weiteren Ausführungsform kann die Luftfördereinrichtung ein weiteres Lüfterrad aufweisen. Das weitere Lüfterrad kann beispielsweise derart axial versetzt neben dem Lüfterrad angeordnet sein, dass es dieselbe Rotationsachse aufweist. Durch die Verwendung eines weiteren Lüfterrades können das Lüfterrad und das weitere Lüfterrad mit einem jeweils geringeren Durchmesser gestaltet sein und/oder mit jeweils niedrigerer Drehzahl betrieben werden. Hierdurch kann eine weiter reduzierte Geräuschentwicklung erreicht werden. Weiterhin ermöglicht die Verwendung der beiden Lüfterräder eine frühzeitige Teilung des geförderten Luftstroms, beispielsweise durch zusätzliche Trennstege und Trennebenen, die z.B. zwischen den beiden Lüfterrädern senkrecht zur gemeinsamen Rotationsachse eingezogen werden können.

In einer Ausführungsform kann die Wärmeübertragungsvorrichtung in dem Lufteinlasskanal angeordnet sein. Dabei kann auch ein erster Abschnitt des Lufteinlasskanals zwischen dem Lufteinlass und der Wärmeübertragungsvorrichtung in einer Hauptfließrichtung des Luftstroms kürzer als 1,5 cm sein. Beispielsweise kann der Lufteinlass durch einen Lufteinlassschlitz oder eine Lufteinlassöffnung gebildet sein, wobei vor der Lufteinlassöffnung ein Lüftungsgitter angeordnet sein kann. Der sich an dem Lufteinlass anschließende Lufteinlasskanal, durch den die von der Luftfördervorrichtung eingesaugte Luft zur Wärmeübertragungsvorrichtung hin befördert wird, kann beliebig gestaltet sein. Insbesondere kann der erste Abschnitt durch einen Freiraum gebildet sein, durch den die durch den Lufteinlass eingesaugte Luft auf die Wärmeübertragungsvorrichtung und anschließend durch sie hindurch geleitet wird.

In dieser Anordnung bildet die Wärmeübertragungsvorrichtung, die beispielsweise schmale Kanäle zum Hindurchleiten der Luft aufweisen kann, eine Barriere im Lufteinlasskanal. Durch diese Barriere kann mit der Luft eingesaugter Schmutz, wie beispielsweise trockenes Laub, nicht aus dem ersten Abschnitt in einen der Wärmeübertragungsvorrichtung nachgelagerten Abschnitt des Lufteinlasskanals gelangen. Beispielsweise kann der Schmutz nicht bis zur Luftfördervorrichtung bzw. dem Lüfterrad gelangen und dieses verschmutzen oder blockieren.

Durch die in der Hauptfließrichtung des Luftstroms kurze Gestaltung des ersten Abschnitts kann der erste Abschnitt leicht gereinigt werden. Beispielsweise können Blätter, die durch die Wärmeübertragungsvorrichtung an einem weiteren Eindringen in den Lufteinlasskanal gehindert werden, möglicherweise noch teilweise aus dem Lufteinlass in eine Umgebung des Klimageräts herausragen und daher einfach entfernbar sein. Weiterhin kann der Lufteinlass ein herausnehmbares Gitter aufweisen und dadurch eine einfache Reinigung des ersten Abschnitts ermöglichen. Hierdurch können eingedrungener Staub und Schmutz einfach entfernt werden.

Durch das weitgehende Fernhalten von Staub und Schmutz aus den Luftführungen des Klimageräts entstehen bei dessen Betrieb weniger Störgeräusche, was die Geräuschentwicklung weiter reduziert.

Bei einer weiteren Ausführungsform ist es möglich, dass die Wärmeübertragungsvorrichtung über verschiedene Lufteinlasskanäle angeströmt wird, wobei die jeweiligen Luftströme aus den verschiedenen Lufteinlasskanälen auch jeweils unterschiedliche Bereiche der Wärmeübertragungsvorrichtung anströmen bzw. durchströmen.

In einer weiteren Ausführungsform sind die Richtungen der durch die jeweiligen Luftauslässe austretenden Luftströme unterschiedlich orientiert. Beispielsweise können die Richtungen in Bezug auf eine Vertikalachse des Klimageräts radial zueinander versetzt sein. Dies kann beispielsweise dadurch erreicht werden, dass die wenigstens zwei Lufteinlasskanäle in radial unterschiedlicher Richtung. beispielsweise in Bezug auf die Rotationsachse des Lüfterrads, zu den jeweiligen Luftauslässen geführt werden. Beispielsweise können die wenigstens zwei Luftauslässe in Bezug auf eine Montageposition des Klimageräts auf dem Dach des Fahrzeugs in Fahrtrichtung nach hinten, jedoch in einem Winkel von ungefähr 60° bis 90° versetzt zueinander ausgerichtet sein.

Durch das Ausblasen der Luft in verschiedene Richtungen wird der beim Austritt der Luft durch die jeweiligen Luftauslässe entstehende Schall und der im Klimagerät erzeugte, mit der Luft herausgetragene Schall in verschiedene Richtungen verteilt, so dass in einer Umgebung des Klimageräts punktuell, d.h. an einzelnen Orten, geringere Geräuschbelastungen erreicht werden können.

In einer Variante dieser Ausführungsform sind die jeweiligen Luftauslässe an jeweils verschiedenen Seiten des Klimageräts angeordnet. Beispielsweise kann einer der Luftauslässe in Bezug auf die Montageposition des Klimageräts zu einer Seite quer zur Fahrtrichtung, beispielsweise nach links oder rechts, ausgerichtet sein. Weiterhin kann wenigstens einer der Luftauslässe auch in Fahrtrichtung hinten, nach oben und/oder nach unten auf das Dach ausgerichtet sein, während ein anderer der wenigstens zwei Luftauslässe an einer anderen Seite des Klimageräts angeordnet ist.

Auch durch diese Maßnahme können in einer Umgebung des Klimageräts punktuell geringere Schallbelastungen erreicht werden.

In einer Variante dieser Ausführungsform ist wenigstens einer der Luftauslässe und/oder Luftauslasskanäle versperrbar und/oder in Bezug auf die Einbauposition drehbar und/oder verschiebbar. Ein Versperren oder Drehen und/oder Verschieben kann beispielsweise durch einen Bediener ausgeführt werden, der den Luftauslass und/oder den Luftauslasskanal bzw. das Gerät an sich beispielsweise um eine Rotationsachse bezüglich der Montageposition dreht bzw. den Luftauslass und/oder den Luftauslasskanal durch eine Klappe verschließt. Hierzu kann auch eine durch den Bediener betätigbare Steuerung vorgesehen sein.

Dies ermöglicht es, selektiv, beispielsweise je nach Parkposition und Umgebung, einzelne Luftauslässe zu versperren und/oder zu verdrehen, um so beispielsweise eine möglichst geringe Geräuschentwicklung in Richtung eines benachbarten Anliegers zu erreichen.

In einer weiteren Ausführungsform ist der Lufteinlasskanal, der erste der wenigstens zwei Luftauslasskanäle, der zweite der wenigstens zwei Lufteinlasskanäle, die Luftstromteilungsvorrichtung und/oder die Umwandung ganz oder teilweise aus einem schalldämmenden Material ausgeformt, von einem schalldämmenden Material umgeben und/oder mit einem schalldämmenden Material beschichtet. Durch eine derartige Ausgestaltung der luftführenden Gehäuseteile des Klimageräts kann die Geräuschemission, die durch das Hindurchleiten der Luft entsteht, weiter reduziert und im Gerät gekapselt werden.

In Varianten dieser Ausführungsform kann expandiertes Polypropylen und/oder ein offenporiger Schaumstoff als das schalldämmende Material verwendet werden. Beispielsweise eignet sich die weiche Granulatstruktur des expandierten Polypropylens wegen seiner Formbarkeit zur Ausgestaltung der Kanalstrukturen, der Umwandung und der Luftstromteilungsvorrichtung.

Die schalldämmenden Eigenschaften des expandierten Polypropylens können noch weiter verstärkt werden, indem eine Granulatstruktur mit offenen Körnern, das heißt mit kleinen Hohlräumen, verwendet wird.

Wird ein offenporiger Schaumstoff zur Schalldämmung verwendet, so kann dieser an den mit der Umgebungsluft in Kontakt stehenden Flächen mit einem Folienüberzug beschichtet werden, wobei der Folienüberzug ein Eindringen von Feuchtigkeit und damit ein Eindringen von Bakterien in die Luftführungsvorrichtungen des Klimageräts effektiv verhindern bzw. vermindern kann.

In einer weiteren Ausführungsform kann der Lufteinlasskanal und/oder wenigstens einer der wenigstens zwei Lufteinlasskanäle länger als breit sein. D.h., er kann in Bezug auf eine Hauptströmungsrichtung der ihn durchströmenden Luft eine größere Länge (längs der Hauptströmungsrichtung) als Breite (quer zur Hauptströmungsrichtung) aufweisen. Durch diese Gestaltung können die an der Luftfördervorrichtung bzw. dem Lüfterrad entstehenden Geräusche innerhalb des Geräts gekapselt und in nur schwacher Form nach außen geleitet werden.

Um auf engem Bauraum eine derartige Gestaltung des Lufteinlasskanals bzw. der Luftauslasskanäle zu ermöglichen, können diese auch gekrümmt geführt werden. Durch die Krümmung wird die Geräuschemission nach außen weiter vermindert. Eine derartige Gestaltung der Lufteinlass- und/oder Luftauslasskanäle ist besonders effektiv in Verbindung mit einer ganzen oder teilweisen Auskleidung oder Ummantelung mit schalldämmendem Material, wie oben bereits beschrieben.

Bei einer Ausführungsform ist das die Luftauslasskanäle bildende Material derart geformt, dass keine Sichtverbindung zwischen dem Lüfterrad und der Umgebung des Klimageräts besteht. Das bedeutet, dass das Lüfterrad von außen nicht sichtbar ist. Auf diese Weise kann eine besonders wirksame Geräuschreduzierung erreicht werden. Z.B. kann das Material die Umwandung bzw. die Luftauslasskanäle derart bilden, dass der Luftstrom umgeleitet wird, so dass keine durchgehend gerade Luftströmung vom Lüfterrad nach außen zum Luftauslass erfolgt. Das Material, insbesondere, wenn es darüber hinaus auch schalldämmende Eigenschaften aufweist, dient auf diese Weise auch als Blockade für den vom Lüfterrad abgegebenen Schall.

In einer weiteren Ausführungsform kann die Luftstromteilungsvorrichtung und/oder das schalldämmende Material nachrüstbar sein. Beispielsweise kann eine wie oben beschriebene geformte Luftstromteilungsvorrichtung, eventuell bezogen mit schalldämmenden Material, sowie zusätzliches schalldämmendes Material zum Auskleiden des Gehäuses bzw. des Lufteinlasskanals und/oder der Luftauslasskanäle angeboten werden, die an einem bestehenden Klimagerät beispielsweise mit Luftführungskanälen aus Kunststoff und mit einer weniger geeigneten Luftstromteilungsvorrichtung bzw. ohne Luftstromteilungsvorrichtung nachgerüstet werden können. Dies ermöglicht eine Verbesserung der Geräuschemissionen auch bei älteren Klimageräten bzw. das Anbieten verschiedener Varianten des Klimageräts.

In einer weiteren Ausführungsform ist das Klimagerät ein Dachklimagerät für ein Fahrzeug. Beispielsweise kann das Klimagerät geeignet für den Aufbau auf dem Dach eines Fahrzeugs und für die Klimatisierung eines Innenraums des Fahrzeugs sein.

Die oben genannten Merkmale ermöglichen es, ein Klimagerät, beispielsweise ein Dachklimagerät zum Einbau auf dem Dach eines Fahrzeugs, bereitzustellen, welches geringere Schallemissionen hat. Weist beispielsweise eine Umgebungsluftführungseinrichtung eines derartigen Klimageräts einzelne oder eine Kombination der vorbeschriebenen Merkmale auf, so können die Schallemissionen des Klimageräts nach außen deutlich verringert werden, was eine Gebrauchstauglichkeit des Klimageräts beispielsweise beim Einsatz auf öffentlichen Campingplätzen verbessert. Weist hingegen alternativ oder zusätzlich eine Innenraumluftführungseinrichtung eines derartigen Klimageräts einzelne oder Kombinationen der vorstehenden Merkmale auf, so können Geräuschemissionen in den Innenraum des Fahrzeugs vermindert werden, was den Komfort der Insassen erhöht. Selbstverständlich können beliebige Kombinationen der Merkmale sowohl in der Innenraumluftführungseinrichtung als auch in der Umgebungsluftführungseinrichtung umgesetzt werden, um sowohl für die Insassen als auch für die Umwelt eine Geräuschbelästigung durch das Klimagerät zu senken oder vollständig zu vermeiden.

Diese und weitere Merkmale werden nachstehend anhand von Beispielen unter Zuhilfenahme der begleitenden Figuren näher erläutert. Es zeigen:
- **Fig. 1**: in perspektivischer Aufsicht ein Dachklimagerät zur Montage auf einem Fahrzeug;
- **Fig. 2**: das Dachklimagerät aus Fig. 1 in einer perspektivischen Sicht der Unterseite;
- **Fig. 3**: eine schematische Schnittansicht durch das Dachklimagerät aus Fig. 1 in einer in Bezug auf eine Montageposition auf einem Dach eines Fahrzeugs horizontalen Schnittebene;
- **Fig. 4**: das Dachklimagerät aus Fig.1 in einer perspektivischen Sicht mit einem Teilschnitt in der horizontalen Schnittebene;
- **Fig. 5**: das Dachklimagerät aus Fig. 1 in einer Schnittansicht mit Schnitt durch das Dachklimagerät in einer bezüglich der Montageposition vertikalen Schnittebene;
- **Fig. 6**: eine schematische Darstellung einer Luftstromführung in einem Dachklimagerät;
- **Fig. 7**: eine schematische Darstellung einer Variante der Luftstromführung aus Fig. 6;
- **Fig. 8a bis 8d**: Varianten von Luftstromführungen im Bereich eines Lüfterrads;
- **Fig. 9a und 9b**: Varianten des Ausblasens eines Luftstroms;
- **Fig. 10a und 10b**: weitere Varianten des Ausblasens des Luftstroms; und
- **Fig. 11**: eine weitere Variante des Ausblasens des Luftstroms.

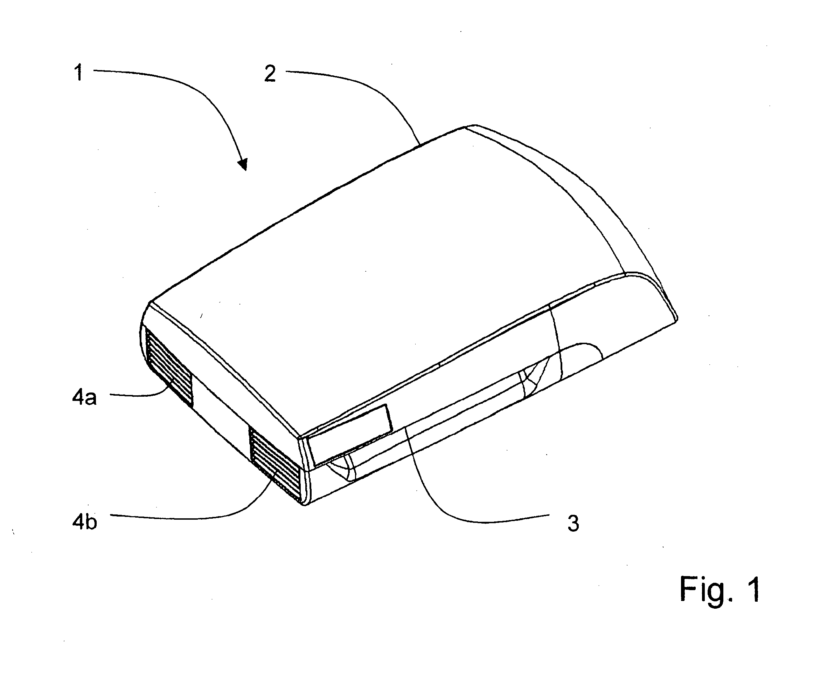

Fig. 1 zeigt in einer perspektivischen Aufsicht ein Klimagerät 1, welches auf dem Dach eines Fahrzeugs, beispielsweise eines Wohnwagens oder Caravans, montiert werden kann. Das Klimagerät 1 hat ein Gehäuse 2, welches derart geformt sein kann, dass es in einer Fahrtrichtung des Fahrzeugs möglichst geringen Luftwiderstand erzeugt. An dem Gehäuse 2 können ein oder mehrere Umgebungslufteinlässe 3 vorgesehen sein, die beispielsweise jeweils in Form von einem oder mehreren Lufteinlassschlitzen oder in Form von mit einem Gitter versehenen Lufteinlassöffnungen gestaltet sein können. Weiterhin sind an einer beispielsweise in Fahrtrichtung rückwärtigen Richtung zwei Umgebungsluftauslässe 4a und 4b mit jeweils einem Gitter als Schutz vor Eingriffen, Einblicken und Verschmutzungen vorgesehen.

Zwischen dem Umgebungslufteinlass 3 und den Umgebungsluftauslässen 4a und 4b kann innerhalb des Gehäuses eine Umgebungsluftführungseinrichtung beispielsweise mit Lufteinlasskanälen, Luftauslasskanälen und einer Luftfördervorrichtung zum Einsaugen der Umgebungsluft durch den Umgebungslufteinlass 3 und zum Ausblasen der Umgebungsluft über die Umgebungsluftauslässe 4a und 4b vorgesehen sein.

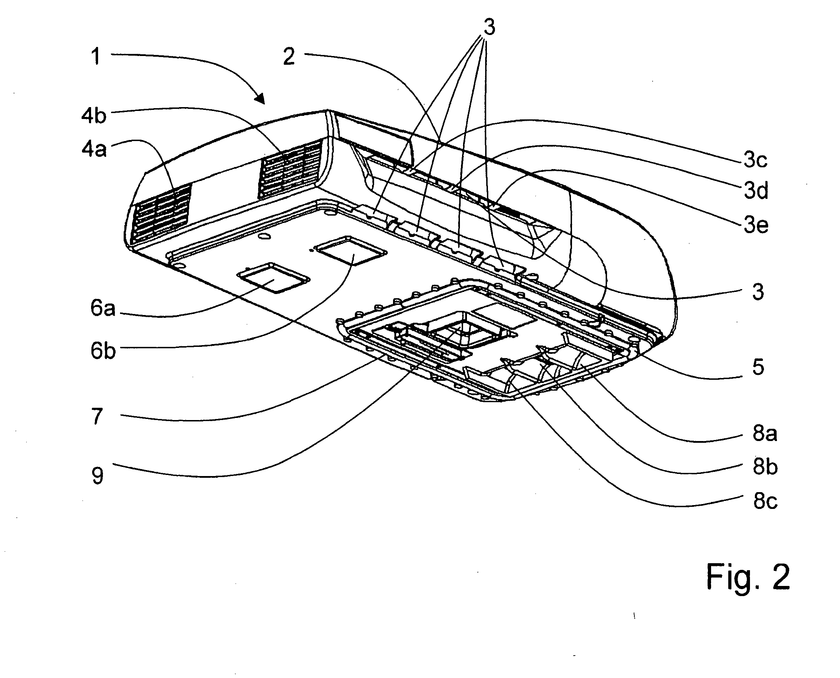

In Fig. 2 ist das Klimagerät aus Fig. 1 in einer perspektivischen Sicht von unten gezeigt. In dieser Ansicht ist die Gestaltung des Umgebungslufteinlasses 3 als Lufteinlassschlitz mit Stegen 3c, 3d und 3e zu sehen. Zum Einbau sind Dachauflageelemente 6a und 6b sowie Einbaudichtungen 5, 7 vorgesehen. Innerhalb des abgedichteten Bereichs befinden sich in Fahrtrichtung vorne Innenraumlufteinlässe 8a, 8b und 8c zum Einlassen von Luft aus dem Innenraum des Fahrzeugs und ein Innenraumluftauslass 9 zum Ausblasen der beispielsweise erwärmten oder gekühlten Innenraumluft in den Innenraum des Fahrzeugs. Zwischen den Innenraumlufteinlässen 8a, 8b und 8c und dem Innenraumluftauslass 9 kann innerhalb des Gehäuses 2 eine Innenraumluftführungseinrichtung beispielsweise mit einem oder mehreren Lufteinlasskanälen, einer Luftfördervorrichtung und mehreren Luftauslasskanälen vorgesehen sein, die ein Durchleiten der Innenraumluft durch das Klimagerät 1 zum Zweck der Temperierung der Innenraumluft ermöglicht.

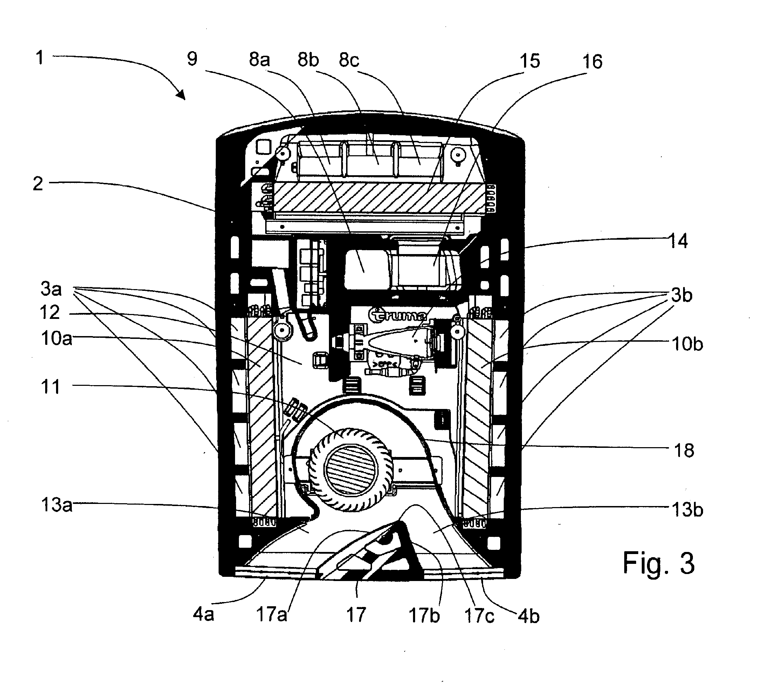

Fig. 3 zeigt das Klimagerät 1 in einer Schnittansicht mit Schnitt in einer in Bezug auf eine Montageposition auf dem Dach des Fahrzeugs horizontalen Schnittebene. In der Schnittansicht wird deutlich, dass der Umgebungslufteinlass 3 in einer

Ausführungsform durch zwei seitliche Umgebungslufteinlässe 3a und 3b gebildet ist. Weiterhin wird deutlich, dass die durch die seitlichen Umgebungslufteinlässe 3a, 3b eingesogene Umgebungsluft nach dem Einsaugen auf Wärmeüberträger 10a und 10b trifft, durch die sie aufgrund des von einem Lüfterrad 11 erzeugten Soges in ein Inneres 12 des Gehäuses 2 gesaugt wird. Das Lüfterrad 11 bläst die angesaugte Umgebungsluft durch Luftauslasskanäle 13a, 13b zu den Umgebungsluftauslässen 4a, 4b, durch die die Umgebungsluft nach außen gelangt. Durch die dadurch gebildete Umgebungsluftführung kann beispielsweise eine in den Wärmeübertragungsvorrichtungen 10a und 10b entstehende Wärme an die Umgebungsluft abgegeben und mit dieser abgeführt werden. Ebenso kann der durch die Wärmeübertragungsvorrichtungen 10a und 10b hindurch gesaugten Umgebungsluft auch Wärme entzogen werden. Dies hängt von einem Anwendungsfall des Dachklimageräts ab, der beispielsweise das Heizen oder alternativ das Kühlen des Innenraums des Fahrzeugs beinhalten kann.

Das als Luftfördervorrichtung für die Umgebungsluft wirkende Lüfterrad 11 ist als Trommelläufer mit beispielsweise 48 Schaufeln in dem Inneren 12 angeordnet und kann mit einer dem Luftförderbedarf entsprechenden Geschwindigkeit, die einer benötigten Heiz- oder Kühlleistung des Klimageräts angepasst sein kann, betrieben werden.

Die Wärmeübertragungsvorrichtungen 10a, 10b sind über einen Kompressor 14 in einem geschlossenen Kältekreislauf mit einer weiteren Wärmeübertragungsvorrichtung 15 verbunden. Die weitere Wärmeübertragungsvorrichtung 15 ist stromab hinter den Innenraumlufteinlassöffnungen 8a, 8b, 8c angeordnet und wird mit der einströmenden, durch ein weiteres Lüfterrad 16-angesaugten Innenraumluft durchströmt, wobei die Innenraumluft temperiert, d.h. je nach Anwendungsfall erwärmt oder gekühlt werden kann. Das weitere Lüfterrad 16 bläst die temperierte Innenraumluft durch den Innenraumluftauslass 9 in den Innenraum des Fahrzeugs aus. Durch diese Innenraumluftführungseinrichtung kann die Innenraumluft beispielsweise gemäß einer Vorgabe eines Bedieners an dem Klimagerät 1 bzw. an einer Steuerungsvorrichtung desselben temperiert werden.

In dem Anwendungsfall "Innenraum kühlen" arbeiten die Wärmeübertragungsvorrichtungen 10a und 10b als Verflüssiger und die weitere Wärmeübertragungsvorrichtung 15 als Verdampfer, sodass die durch die Innenraumluftführungseinrichtung geführte Innenraumluft gekühlt und die dabei entstehende Wärme in die Umgebung des Fahrzeugs abgegeben wird. In dem weiteren Anwendungsfall "Innenraum heizen" arbeiten die Wärmeübertragungsvorrichtungen 10a und 10b als Verdampfer und die weitere Übertragungsvorrichtung 15 als Verflüssiger, wodurch die durch die Innenraumluftführungseinrichtung geleitete Innenraumluft erwärmt wird und der Umgebungsluft Wärme entzogen wird.

Wie in Fig. 3 dargestellt, wird der durch das Lüfterrad 11 ausgeblasene Luftstrom der Umgebungsluft stromab von dem Lüfterrad 11 in zwei Luftauslasskanäle 13a und 13b ausgeblasen. Durch das Aufteilen des Luftstroms in die beiden separaten Luftauslasskanäle 13a, 13b kann der Einzelquerschnitt beispielsweise eines jeden der beiden Luftauslasskanäle 13a, 13b gegenüber einem ebenfalls denkbaren, alleinigen Luftauslasskanal verringert werden, der Gesamtquerschnitt als Summe der Einzelquerschnitte vergrößert werden. Hierdurch können die in den Luftauslasskanälen 13a, 13b auftretenden Strömungsgeschwindigkeiten der Luftpartikel beispielsweise durch die Reibung an den Begrenzungen bzw. Wänden der Luftauslasskanäle 13a, 13b vergleichmäßigt werden, d.h. es treten geringere Differenzgeschwindigkeiten an benachbart gelegenen Orten innerhalb der Luftauslasskanäle 13a, 13b auf. Durch die geringeren Differenzgeschwindigkeiten kommt es seltener zu Verwirbelungen, die Ursache für Geräuschentwicklungen sein können. Weiterhin werden der durch das Lüfterrad 11 verursachte Drehklang sowie Geräusche durch Verwirbelungen im Bereich des Lüfterrads 11 durch die vergleichsweise schmalen Luftauslasskanäle 13a, 13b im Klimagerät 1 gekapselt, so dass Geräuschemissionen über den Luftschall nach außen reduziert werden.

Die Luftauslasskanäle 13a, 13b weisen senkrecht zu einer Hauptfließrichtung eines jeweils darin geführten Luftstroms eine sich stromab in Richtung der Luftauslässe 4a, 4b vergrößernde Querschnittsfläche auf. Durch diese Geometrie wirken die Luftauslasskanäle 13a, 13b als Diffusor und senken die Strömungsgeschwindigkeit der jeweils darin geführten Luftströme bzw. Luftpartikel auf dem Weg zum Luftauslass. Bei einem Auftreffen der ausgeblasenen Umgebungsluft auf einem Gitter der Umgebungsluftauslässe 4a, 4b ist der Luftstrom daher bereits verlangsamt, sodass an den Gittern auftretende Geräusche und Verwirbelungen vermindert werden. Hierdurch kann eine Geräuschemission des Klimageräts 1 weiter vermindert werden.

Die Luftauslasskanäle 13a und 13b werden durch eine in einem stromab vom Lüfterrad 11 befindlichen Verzweigungsbereich angeordnete Luftstromteilungsvorrichtung 17 geteilt. Die Luftstromteilungsvorrichtung 17 weist eine erste Flanke 17a, eine zweite Flanke 17b und in einem Anstoßbereich der ersten und zweiten Flanke 17a, 17b einen Scheitelbereich 17c auf. Die Form der Luftstromteilungsvorrichtung, insbesondere der ersten Flanke 17a, der zweiten Flanke 17b und des Scheitelbereichs 17c kann derart gewählt sein, dass ein jeweils daran entlang geführter Luftstrom eine möglichst geringe lokale Maximalgeschwindigkeit aufweist. Zur Bestimmung einer derartigen Form kann beispielsweise ein gängiges Programm zur Strömungssimulation verwendet werden, welches die an verschiedenen Orten in den Luftauslasskanälen 13a, 13b auftretenden Geschwindigkeiten berechnet und eine Ausformung der Luftstromteilungsvorrichtung 17 derart optimiert, dass die in den Luftauslasskanälen 13a, 13b berechneten Geschwindigkeiten möglichst gering bzw. unter einem vorgegebenen Grenzwert sind.

In der dargestellten Form ist die erste Flanke 17a dem Lüfterrad 11 im Wesentlichen tangential zugewandt und in einer Laufrichtung des Lüfterrads hinter dem Scheitelbereich angeordnet. Die erste Flanke 17a kann beispielsweise radial zum Lüfterrad 11 verschoben sein. Die erste Flanke 17a begrenzt die Luftstromteilungsvorrichtung 17 konvex. Die zweite Flanke 17b ist von dem Lüfterrad 11 wegführend angeordnet und begrenzt die Luftstromteilungsvorrichtung 17 konkav. Beispielsweise kann die zweite Flanke 17b im Wesentlichen in Verlängerung einer Tangente an einen äußeren Umfang des Lüfterrades 11 von dem Lüfterrad 11 wegführen. Der Scheitelbereich 17c ist gerundet. Durch diese gerundete, im Luftstrom schräg gestellte Keilform der Luftstromteilungsvorrichtung 17 wird eine Teilung des von dem Lüfterrad 11 ausgeblasenen Umgebungsluftstroms ermöglicht, ohne dass sich Rückströmgebiete an der Luftstromteilungsvorrichtung 11 bilden können, die andernfalls Ursache für Verwirbelungen und hohe Differenzgeschwindigkeiten sein und so zu einer Geräuschentwicklung führen könnten. Hierdurch wird die Geräuschentwicklung in der Umgebungsluftführungsvorrichtung deutlich vermindert und die Geräuschemissionen in eine Umgebung des Fahrzeugs reduziert.

Das Lüfterrad 11 ist teilweise von einer Umwandung 18 umgeben, die das Lüfterrad 11 beispielsweise in einem Winkel von mehr als 135° um eine Rotationsachse des Lüfterrads 11 umgeben kann. Durch die Umwandung 18 wird die von dem Lüfterrad 11 geförderte Umgebungsluft in Richtung der Luftauslasskanäle 13a. 13b geleitet. In der gezeigten Ausführungsform nimmt ein Abstand der Umwandung von einer radialen Außenkante des Lüfterrads in einer Laufrichtung des Lüfterrads 11 zu. Die Umwandung 18 bildet damit ein schneckenhausartiges Gehäuse um das Lüfterrad 11. Durch diese Gestaltung wird die von dem Lüfterrad 11 nach außen geschleuderte Luft durch die Verbreiterung des Abstands stromab gebremst und trifft somit mit niedrigerer Geschwindigkeit an den Luftauslasskanälen 13a und 13b bzw. der Luftstromteilungsvorrichtung 17 auf. Hierdurch können Geräuschentwicklungen weiter vermindert werden.

Durch die Ausrichtung der Luftauslasskanäle 13a und 13b innerhalb des Gehäuses 2 des Klimageräts 1 treten die durch die Umgebungsluftauslässe 4a und 4b austretenden Luftströme in jeweils unterschiedlichen Richtungen aus dem Klimagerät 1 aus. Der aus dem Klimagerät herausgetragene Schall wird damit in unterschiedlichen Richtungen in die Umgebung propagiert. Hierdurch kann eine in einer Umgebung des Dachklimageräts 1 punktuell auftretende Geräuschbelastung vermindert werden, insbesondere im Vergleich zu einer Ausgestaltung, bei der die aus dem Gerät herausgeführten Umgebungsluftströme in lediglich eine Richtung ausgeblasen werden und damit den Schall in lediglich eine Richtung propagieren.

Durch die Anordnung der Wärmeübertragungsvorrichtungen 10a und 10b knapp, das heißt mit einem Abstand von beispielsweise weniger als 1 oder 1,5 cm, hinter den seitlichen Umgebungslufteinlässen 3a, 3b wird ein erster Abschnitt der Umgebungsluftführungsvorrichtung zwischen den seitlichen Umgebungslufteinlässen 3a, 3b einerseits und den Wärmeübertragungsvorrichtungen 10a und 10b andererseits auf einen sehr schmalen Raum begrenzt.

Vor dem Eintritt der Umgebungsluft in das Innere 12 des Klimageräts 1 wird die Umgebungsluft durch die Wärmeübertragungsvorrichtungen 10a und 10b gesogen. Diese können bei geeigneter Gestaltung beispielsweise mit schmalen Durchlässen als Barriere bzw. Filter für Schmutzpartikel wie beispielsweise trockenes Laub wirken, welches durch die seitlichen Umgebungslufteinlässe 3a und 3b eindringen kann. Die Schmutzpartikel und das Laub werden knapp hinter den seitlichen Umgebungslufteinlässen 3a und 3b vor den Wärmeübertragungsvorrichtungen 10a und 10b aufgefangen und können nicht in das Innere 12 des Klimageräts 1 vordringen. Aus dem Bereich zwischen den seitlichen Umgebungslufteinlässen 3a und 3b und den Wärmeübertragungsvorrichtungen 10a und 10b können die Schmutzpartikel und das Laub einfach entfernt werden. Da Laub und Schmutzpartikel häufig Ursache für Störgeräusche wie beispielsweise ein Sirren oder Flattergeräusche ist, kann hierdurch die Geräuschentwicklung bei einem Betrieb des Klimageräts 1 weiter gesenkt werden.

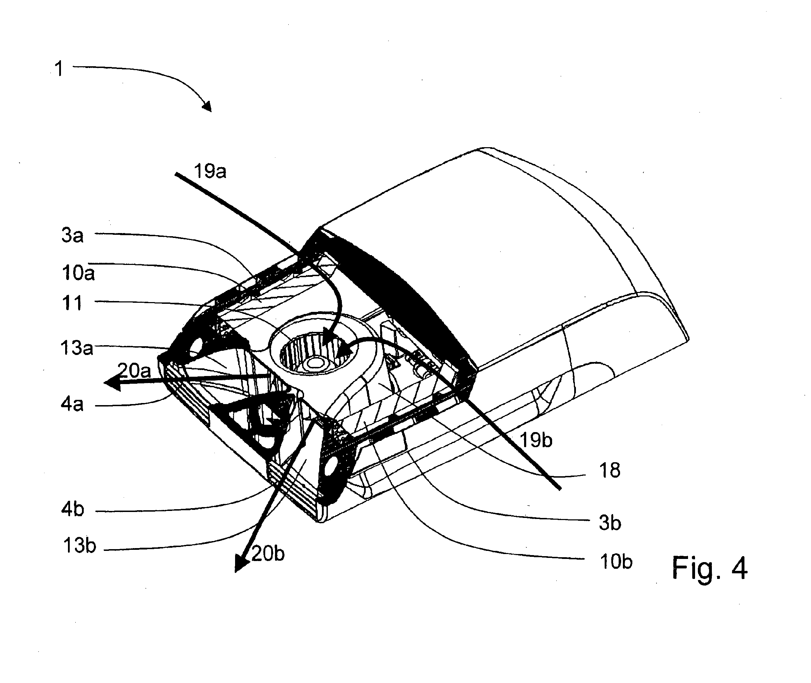

Fig. 4 zeigt das Klimagerät 1 in einer seitlichen Perspektivansicht mit teilweisem Schnitt in einer in Bezug auf die Montageposition des Klimageräts 1 horizontalen Schnittebene. In dieser Darstellung kann die Führung der Umgebungsluft mit Einsaugen in Richtung der Pfeile 19a und 19b durch die Umgebungslufteinlässe 3a und 3b und durch die Wärmeübertragungsvorrichtungen 10a und 10b hin zum Lüfterrad 11 sowie die Beschleunigung durch das Lüfterrad 11 und das Ausblasen durch die Luftauslasskanäle 13a und 13b aus den Umgebungsluftauslässen 4a und 4b in Richtung der Pfeile 20a und 20b verfolgt werden. Weiterhin wird die räumliche Gestaltung bzw. das Umschließen eines Kanals zum Ausleiten der vom Lüfterrad beschleunigten Umgebungsluft durch die Umwandung 18 deutlich.

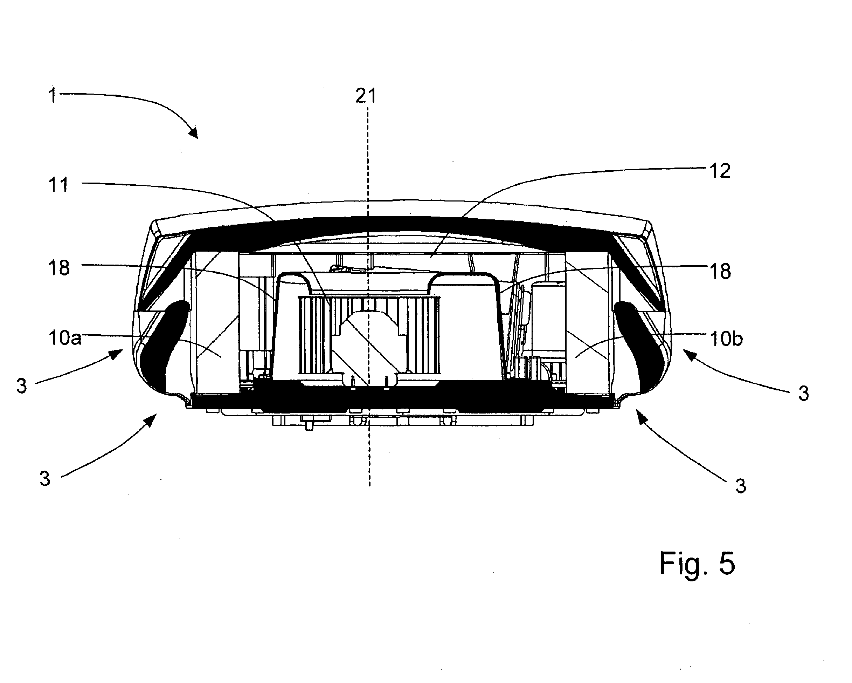

In Fig. 5 ist das Klimagerät 1 in einer seitlichen Schnittansicht in einer in Bezug auf die Montageposition des Klimageräts quer zur Fahrtrichtung liegenden Schnittebene durch eine Rotationsachse 21 des Lüfterrads 11 gezeigt. In dieser Schnittansicht wird die Gestaltung der Umwandung 18 und damit die Ausformung eines Diffusors entlang einer Außenkante des Lüfterrads 11 verdeutlicht. In der Schnittansicht ist links von dem Lüfterrad 11 ein Abstand zwischen der Umwandung 18 und einer radialen Außenkante des Lüfterrads 11 geringer als rechts neben dem Lüfterrad 11, wo der Abstand zwischen der Umwandung 18 und der radialen Außenkante des Lüfterrads 11 deutlich größer ist. Der durch die Umwandung 18 gebildete Kanal zur Führung der von dem Lüfterrad 11 ausgeblasenen Umgebungsluft wirkt daher als Diffusor und bremst die ausgeblasene Umgebungsluft auf dem Weg zu den Umgebungsluftauslässen 4a und 4b.

Weiterhin ist in der seitlichen Schnittansicht die Anordnung der Wärmeübertragungsvorrichtung 10a und 10b knapp, das heißt beispielsweise maximal 1,5 cm hinter den Umgebungslufteinlässen 3a und 3b zu sehen. Es wird deutlich, dass trockenes Laub und Verschmutzungen nicht in das Innere 12 gelangen und einfach durch die Umgebungslufteinlässe 3a und 3b entfernt werden können.

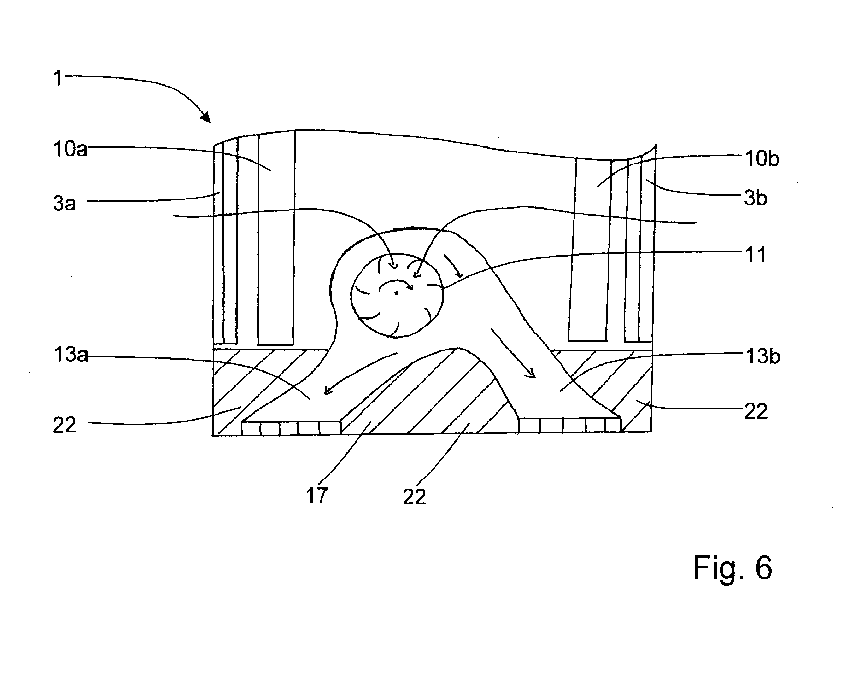

Fig. 6 zeigt schematisch die Umgebungsluftführungswege in einem Klimagerät mit Ausblasen des Umgebungsluftstroms durch Luftauslasskanäle 13a und 13b in verschiedenen Richtungen. Der schraffierte Bereich 22 zeigt dabei mögliche Anordnungen für ein schalldämmendes Material. Als schalldämmendes Material kann beispielsweise expandiertes Polypropylen oder ein offenporiger Schaumstoff verwendet werden. Bei der Verwendung von expandiertem Polypropylen kann auch eine Granulatstruktur mit offenen Körnern gewählt werden, die noch verbesserte Schalldämmungseigenschaften aufweist. Weiterhin ist es möglich, schalldämmendes Material im Bereich der Umgebungslufteinlässe 3a, 3b, im Bereich der Umwandung 18 des Lüfterrads 11 sowie im Bereich der Umgebungsluftauslässe 4a, 4b beispielsweise als Beschichtung aufzubringen oder diese Elemente aus dem schalldämmenden Material auszuformen.

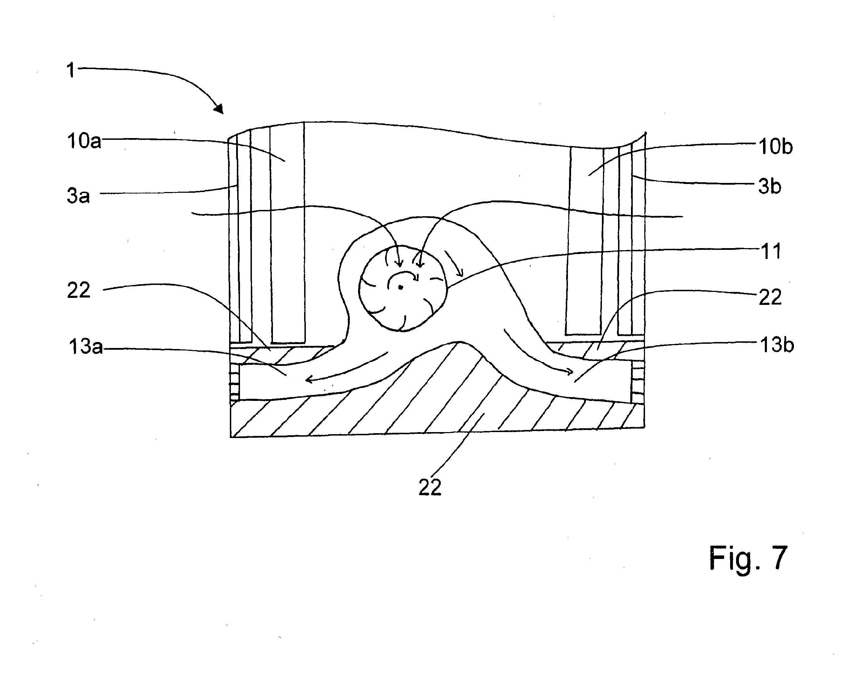

Eine alternative Anordnung der Luftauslasskanäle 13a und 13b zeigt Fig. 7, in der die Luftauslasskanäle 13a und 13b zu gegenüberliegenden Seiten seitlich nach außen geführt werden. Hierbei ist eine Länge der Luftauslasskanäle 13a und 13b jeweils größer als eine Breite bezogen auf die durch die Pfeile angedeutete Hauptströmungsrichtung gewählt. Durch diese lange und schmale Kanalgeometrie werden Geräusche, die im Bereich des Lüfterrads entstehen können, im Klimagerät gekaspelt und nur abgeschwächt nach außen geleitet bzw. nur abgeschwächt durch die Luftströme nach außen propagiert.

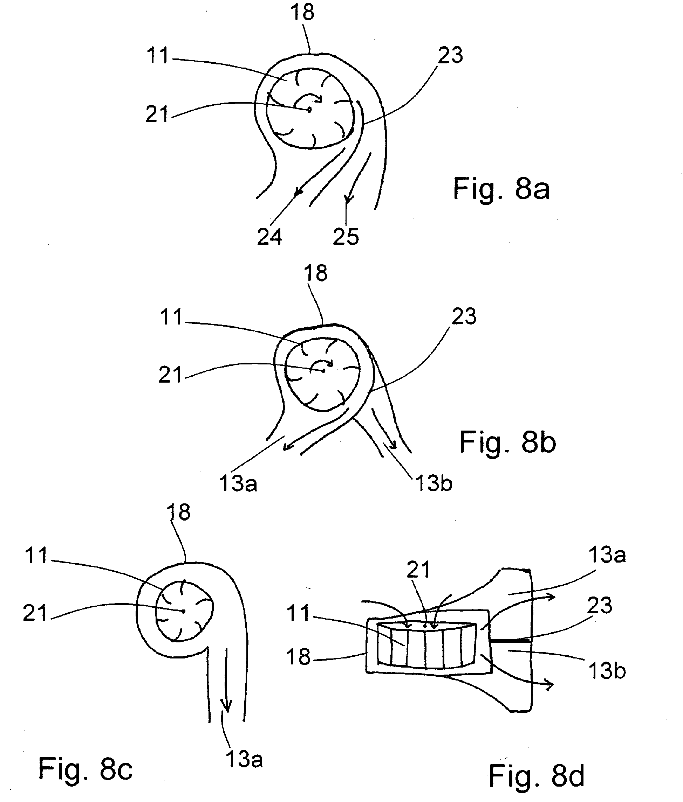

In den Fig. 8a bis 8d sind verschiedene Ausgestaltungen der Umgebung des Lüfterrads 11 schematisch dargestellt. Der von dem Lüfterrad 11 ausgeblasene Luftstrom wird durch einen Trennsteg 23, welcher das Lüfterrad 11 in einem Winkelbereich von beispielsweise wenigstens 45° umgibt, in zwei separate Luftströme 24 und 25 aufgeteilt. Die Luftströme 24 und 25 können den jeweiligen Luftauslasskanäle 13a und 13b zugeleitet werden. Eine frühzeitige Trennung des von dem Lüfterrad 11 ausgeblasenen Luftstroms im Bereich des Lüfterrads 11 vergleichmäßigt die Fließgeschwindigkeit der Partikel innerhalb des von dem Lüfterrad 11 ausgeblasenen Luftstroms. Hohe Differenzgeschwindigkeiten, die beispielsweise zu Verwirbelungen und damit zu Geräuschentwicklungen führen könnten, werden dadurch vermieden.

In Fig. 8a erstreckt sich der Trennsteg in einer Ebene längs zu der Rotationsachse 21 des Lüfterrads 11 beispielsweise im Wesentlichen über eine längs der Rotationsachse 21 des Lüfterrads 11 gemessenen Höhe des Lüfterrads 11.

In Fig. 8b wird der von dem Lüfterrad 11 ausgeblasene Luftstrom durch einen Trennsteg senkrecht zur Rotationsachse des Lüfterrads 11 getrennt und den Luftauslasskanälen 13a und 13b, welche axial entlang der Rotationsachse 21 zueinander versetzt angeordnet sein können, zugeführt.

In Fig. 8c weist die das Lüfterrad 11 teilweise umgebende Umwandung 18 einen im Wesentlichen gleichbleibenden Abstand von der radialen Außenkante des Lüfterrads 11 auf. Die seitliche Schnittansicht 8d dieser Anordnung zeigt, dass eine längs zur Rotationsachse 21 gemessene Höhe des Lüfterrads 11 eines zwischen der Umwandung 18 und dem Lüfterrad befindlichen Freiraums in der Laufrichtung des Lüfterrads 11 zunimmt und durch den Trennsteg 23 in einer Ebene senkrecht zur Rotationsachse 21 getrennt wird. Der durch das Lüfterrad 11 ausgeblasene Luftstrom wird dadurch auf die entlang der Rotationsachse 21 axial versetzten Umgebungsluftauslasskanäle 13a und 13b aufgeteilt.

Durch die in den Fig. 8a bis 8d gezeigten Anordnungen des Lüfterrads 11, der Umwandung 18, des Trennstegs 13 und der Luftauslasskanäle 13a und 13b können je nach Bauraumanforderungen Varianten gewählt werden, die ein Verlangsamen des ausgeblasenen Luftstroms und ein Ausleiten in verschiedene Richtungen ermöglichen, sodass eine reduzierte Geräuschentwicklung außerhalb des Klimageräts 1 erreicht werden kann.

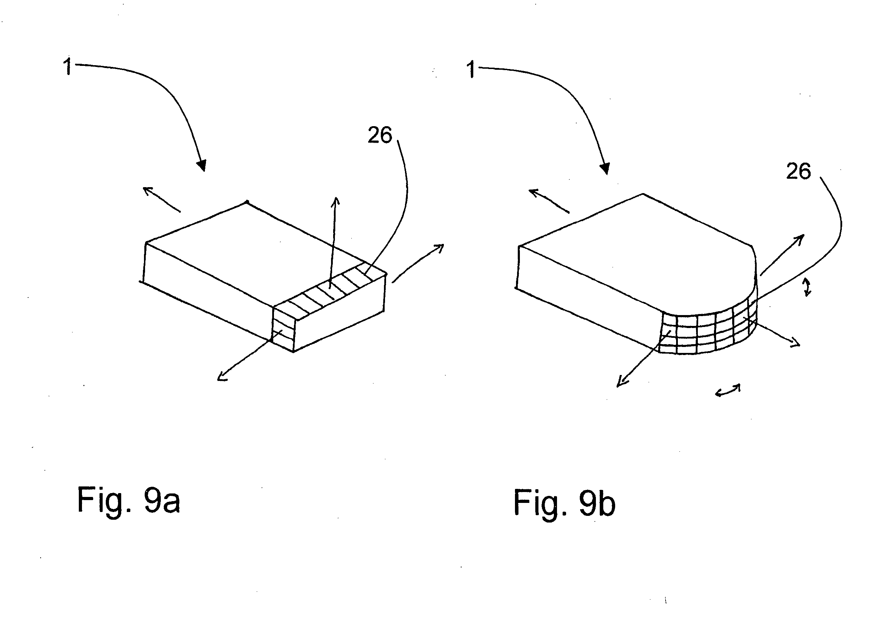

In den Fig. 9a und 9b sind schematisch Varianten des Klimageräts 1 mit jeweils unterschiedlich gestalteten Luftauslässen für die Umgebungsluft gezeigt.

So weist das in Fig. 9a gezeigte Klimagerät 1 Umgebungsluftauslässe 26 seitlich zu zwei Seiten und nach oben auf, welche beispielsweise einzeln versperrbar sein können. Je nach Parkposition und Umgebung des Fahrzeugs kann beispielsweise wenigstens einer der Umgebungsluftauslässe 26 versperrt werden, um eine Geräuschemission zu dieser Seite zu verringern.

In Fig. 9b ist eine weitere Variante des Klimageräts 1 gezeigt, in der die Umgebungsluftauslässe 26 beispielsweise hinter einem Lüftungsgitter in Bezug auf eine Einbauposition des Klimageräts 1 drehbar sind. So kann eine Geräuschemission je nach Parkposition und Nachbarschaft des Fahrzeugs gezielt ausgerichtet werden.

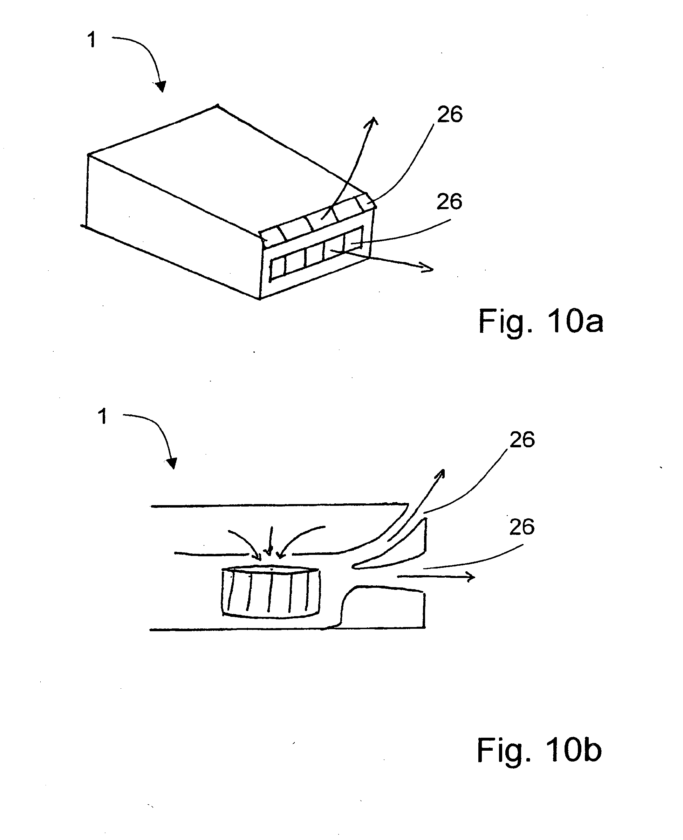

In den Fig. 10a und 10b ist schematisch eine weitere Variante des Klimageräts 1 gezeigt, die ein Austreten der Luftströme durch die Umgebungsluftauslässe 26 in unterschiedliche Richtungen ermöglicht. Das in Fig. 10a gezeigte Klimagerät 1 ist in Fig. 10b in einer schematischen, seitlichen Schnittansicht zu sehen, in der das richtungsverschiedene Ausblasen der Teilluftströme durch Pfeile schematisch angedeutet ist.

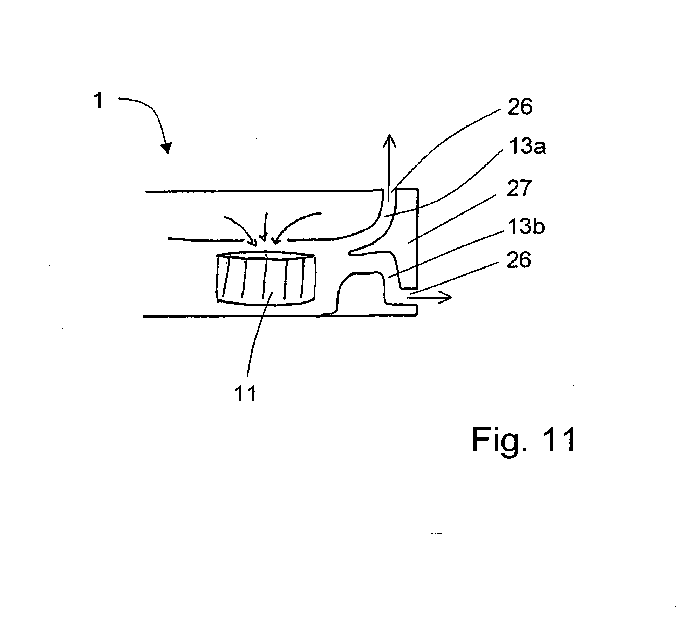

Fig. 11 zeigt wiederum schematisch eine weitere Variante des Klimageräts 1. Dabei sind die Luftauslasskanäle 13 zu den Umgebungsluftauslässen 26 in besonderer, hier gekrümmter bzw. gewinkelter Weise ausgeformt. Das wird dadurch erreicht, dass das Material eines die Luftauslasskanäle 13 bildenden Gehäusebereichs 27 z.B. ein Schaummaterial (z.B. expandiertes Polypropylen) ist, mit dem nahezu beliebige Formen und Konturen erzeugt werden können. So können die Luftauslasskanäle 13 ohne besonderen fertigungstechnischen Aufwand frei geformt werden.

Insbesondere kann ist es somit möglich, dass das die Luftauslasskanäle 13 bildende Material derart geformt ist, dass keine Sichtverbindung zwischen dem Lüfterrad 11 und der Umgebung des Klimageräts besteht. Das Lüfterrad 11 ist für einen Betrachter dann von außen nicht sichtbar. So können die Geräusche, die im Betrieb durch das Lüfterrad 11 erzeugt werden, wirksam von der Umgebung abgeschirmt werden. Die Schallwellen müssen, um nach außen in die Umgebung zu gelangen, in den gekrümmten bzw. gewinkelten Luftauslasskanälen 13 mehrfach umgelenkt werden, so dass sie stark gedämpft werden. Dies gilt umso mehr, wenn das die Luftauslasskanäle 13 bildende Material eine schalldämpfende Wirkung hat.

Durch die gezeigten Maßnahmen, die sowohl einzeln als auch in Kombination zum einen an der Umgebungsluftstromführung, zum anderen an der Innenraumluftstromführung umgesetzt werden können, kann je nach Anforderung, Gestaltung und vorhandenem Bauraum eine verbesserte Geräuschemission bei dem Klimagerät 1 erreicht werden. Je nachdem ob eine Reduktion der Geräuschemission im Innenraum oder in einer Umgebung des Klimageräts 1 erreicht werden soll, können sämtliche Maßnahmen, die hier beispielhaft für die Umgebungsluftführung gezeigt wurden, in der Umgebungsluftführung wie gezeigt und/oder in der Innenraumluftführung umgesetzt werden. Hierdurch kann die Geräuschemission sowohl in die Umgebung als auch in den Innenraum des Fahrzeugs deutlich reduziert werden.

## Patentansprüche

1. Klimagerät (1), mit
- einem von einem Lufteinlass (3, 3a, 3b) wegführenden Lufteinlasskanal,
- einer stromab von dem Lufteinlasskanal angeordneten Luftfördervorrichtung (11, 16),
- wenigstens zwei zu jeweils einem Luftauslass (4a, 4b) führenden Luftauslasskanälen (13a, 13b), und mit
- einer in dem Lufteinlasskanal und/oder in den Luftauslasskanälen (13a, 13b) angeordneten Wärmeübertragungsvorrichtung (10a, 10b), durch die die durch den Lufteinlasskanal und/oder durch die Luftauslasskanäle geführte Luft hindurch geleitet wird; wobei
- die Richtungen der durch die jeweiligen Luftauslässe (4a, 4b) austretenden Luftströme unterschiedlich orientiert sind; und wobei
- der Lufteinlass (3, 3a, 3b) und die Luftauslässe (4a, 4b) in eine Umgebung außerhalb eines zu klimatisierenden Raums geöffnet sind,
**dadurch gekennzeichnet, dass**
- ein Verzweigungsbereich zu den wenigstens zwei zu jeweils einem Luftauslass (4a, 4b) führenden Luftauslasskanälen (13a, 13b) stromab von der Luftfördervorrichtung (11) angeordnet ist,
- in dem Verzweigungsbereich eine Luftstromteilungsvorrichtung (17) angeordnet ist, und dass
- die Luftstromteilungsvorrichtung (17) eine einen ersten (13a) der wenigstens zwei Luftauslasskanäle (13a, 13b) begrenzende erste Flanke (17a) und eine einen zweiten (13b) der wenigstens zwei Luftauslasskanäle (13a, 13b) begrenzende, an der ersten Flanke (17a) in einem Scheitelbereich (17c) angrenzende zweite Flanke (17b) aufweist.

2. Klimagerät (1) nach Anspruch 1, wobei wenigstens einer der Luftauslasskanäle (13a, 13b) senkrecht zu einer Hauptfließrichtung eines darin geführten Luftstroms eine sich stromab vergrößernde Querschnittsfläche aufweist.

3. Klimagerät (1) nach einem der vorstehenden Ansprüche, wobei
- die Luftfördervorrichtung ein Lüfterrad (11) aufweist,
- die erste Flanke (17a) in einer Laufrichtung des Lüfterrades (11) hinter dem Scheitelbereich (17c) angeordnet und dem Lüfterrad (11) im Wesentlichen tangential zugewandt ist oder parallel zu einer zu dem Lüfterrad tangential stehenden virtuellen Tangente verläuft und
- die zweite Flanke (17b) von dem Lüfterrad (11) im Wesentlichen tangential wegführend angeordnet ist.

4. Klimagerät (1) nach einem der vorstehenden Ansprüche, wobei
- die erste Flanke (17a) die Luftstromteilungsvorrichtung (17) konvex begrenzt,
- die zweite Flanke (17b) die Luftstromteilungsvorrichtung (17) konkav begrenzt und
- der Scheitelbereich (17c) gerundet ist.

5. Klimagerät (1) nach Anspruch 3, wobei
- eine das Lüfterrad (11) teilweise umgebende Umwandung (18) vorgesehen ist und
- ein Abstand der Umwandung (18) von einer radialen Außenkante des Lüfterrads (11) in der Laufrichtung des Lüfterrads (11) zunimmt.

6. Klimagerät (1) nach Anspruch 3, wobei
- eine das Lüfterrad (11) teilweise umgebende Umwandung (18) vorgesehen ist,
- ein Abstand der Umwandung (18) von einer radialen Außenkante des Lüfterrads (11) in der Laufrichtung des Lüfterrads im Wesentlichen konstant ist und
- eine längs zu der Rotationsachse (21) des Lüfterrads (11) gemessene Höhe eines zwischen der Umwandung (18) und dem Lüfterrad (11) befindlichen Freiraums in der Laufrichtung des Lüfterrads (11) zunimmt.

7. Klimagerät (1) nach Anspruch 6, wobei
- in dem zwischen der Umwandung (18) und dem Lüfterrad (11) befindlichen Freiraum ein das Lüfterrad (11) in einem Winkelbereich um die Rotationsachse (21) des Lüfterrads (11) umgebender Trennsteg (23) vorgesehen ist, und
- der Trennsteg (23) den von dem Lüfterrad (11) ausgeblasenen Luftstrom aufteilt und anteilig jeweils einem der Luftauslasskanäle (13a, 13b) zuführt.

8. Klimagerät (1) nach Anspruch 7, wobei sich der Trennsteg (23) zwischen dem Lüfterrad (11) und der Umwandung (18) in einer Richtung längs zu der Rotationsachse (21) des Lüfterrads (11) im Wesentlichen über eine längs der Rotationsachse (21) des Lüfterrades (11) gemessene Höhe des Lüfterrades (11) erstreckt.

9. Klimagerät (1) nach Anspruch 7, wobei
- sich der Trennsteg (23) in einer Ebene senkrecht zur Rotationsachse (21) des Lüfterrads (11) erstreckt, und wobei
- die wenigstens zwei Luftauslasskanäle (13a, 13b) axial entlang der Rotationsachse (21) des Lüfterrads (11) zueinander versetzt angeordnet sind.

10. Klimagerät (1) nach einem der vorstehenden Ansprüche, wobei die Wärmeübertragungsvorrichtung (10a, 10b) in dem Lufteinlasskanal angeordnet ist.

11. Klimagerät (1) nach einem der vorstehenden Ansprüche, wobei die Luftauslässe (4a, 4b) an jeweils verschiedenen Seiten des Klimageräts (1) angeordnet sind.

12. Klimagerät (1) nach einem der vorstehenden Ansprüche, wobei wenigstens einer der Luftauslässe (4a, 4b) und/oder der Luftauslasskanäle (13a, 13b) versperrbar und/oder in Bezug auf eine Einbauposition des Klimageräts (1) drehbar und/oder verschiebbar ist.

13. Klimagerät (1) nach einem der vorstehenden Ansprüche, wobei der Lufteinlasskanal, der erste der wenigstens zwei Luftauslasskanäle (13a, 13b), der zweite der wenigstens zwei Luftauslasskanäle (13a, 13b) und/oder die Luftstromteilungsvorrichtung (17) ganz oder teilweise aus einem schalldämmenden Material ausgeformt, von einem schalldämmenden Material umgeben und/oder mit einem schalldämmenden Material beschichtet sind.

14. Klimagerät nach einem der vorhergehenden Ansprüche, sofern auf Anspruch 5 oder 6 rückbezogen, wobei die Umwandung (18) ganz oder teilweise aus einem schalldämmenden Material ausgeformt, von einem schalldämmenden Material umgeben und/oder mit einem schalldämmenden Material beschichtet ist.

15. Klimagerät (1) nach Anspruch 13 oder 14, wobei das schalldämmende Material expandiertes Polypropylen oder ein offenporiger Schaumstoff ist.

16. Klimagerät (1) nach einem der vorstehenden Ansprüche, wobei der Lufteinlasskanal und/oder wenigstens einer der wenigstens zwei Luftauslasskanäle (13a, 13b) länger als breit ist.

17. Klimagerät (1) nach Anspruch 3, wobei das die Luftauslasskanäle (13) bildende Material derart geformt ist, dass keine Sichtverbindung zwischen dem Lüfterrad (11) und der Umgebung des Klimageräts besteht.

## Claims

1. An air-conditioning unit (1) comprising
- an air inlet channel leading away from an air inlet (3, 3a, 3b),
- an air conveying device (11, 16) arranged downstream of the air inlet channel,
- at least two air outlet channels (13a, 13b) each leading to a respective air outlet (4a, 4b), and comprising
- a heat transfer device (10a, 10b) which is arranged in the air inlet channel and/or in the air outlet channels (13a, 13b) and through which the air guided through the air inlet channel and/or through the air outlet channels is conducted;
- the directions of the air flows exiting through the respective air outlets (4a, 4b) being oriented differently; and
- the air inlet (3, 3a, 3b) and the air outlets (4a, 4b) being open into an environment outside a room to be air-conditioned,
**characterized in that**
- a branching area to the at least two air outlet channels (13a, 13b) each leading to a respective air outlet (4a, 4b) is arranged downstream of the air conveying device (11),
- an air flow dividing device (17) is arranged in the branching area, and **in that**
- the air flow dividing device (17) includes a first flank (17a) bordering a first (13a) of the at least two air outlet channels (13a, 13b) and a second flank (17b) bordering a second (13b) of the at least two air outlet channels (13a, 13b) and adjoining the first flank (17a) in an apex area (17c).

2. The air-conditioning unit (1) according to claim 1, wherein at least one of the air outlet channels (13a, 13b) has, perpendicular to a main flow direction of an air flow guided therein, a cross-sectional area that increases downstream.

3. The air-conditioning unit (1) according to either of the preceding claims, wherein
- the air conveying device includes a fan wheel (11),
- the first flank (17a) is arranged behind the apex area (17c) in a direction of travel of the fan wheel (11) and faces the fan wheel (11) substantially tangentially or extends parallel to a virtual tangent which is tangential to the fan wheel, and
- the second flank (17b) is arranged to lead substantially tangentially away from the fan wheel (11).

4. The air-conditioning unit (1) according to any of the preceding claims, wherein
- the first flank (17a) borders the air flow dividing device (17) convexly,
- the second flank (17b) borders the air flow dividing device (17) concavely, and
- the apex area (17c) is rounded.

5. The air-conditioning unit (1) according to claim 3, wherein
- a wall (18) is provided which partly surrounds the fan wheel (11), and
- a distance of the wall (18) from a radial outer edge of the fan wheel (11) increases in the direction of travel of the fan wheel (11).

6. The air-conditioning unit (1) according to claim 3, wherein
- a wall (18) is provided which partly surrounds the fan wheel (11),
- a distance of the wall (18) from a radial outer edge of the fan wheel (11) is substantially constant in the direction of travel of the fan wheel, and
- a height of a free space located between the wall (18) and the fan wheel (11) as measured along the axis of rotation (21) of the fan wheel (11) increases in the direction of travel of the fan wheel (11).

7. The air-conditioning unit (1) according to claim 6, wherein
- a separating web (23) surrounding the fan wheel (11) in an angular range about the axis of rotation (21) of the fan wheel (11) is provided in the free space located between the wall (18) and the fan wheel (11), and
- the separating web (23) divides the air flow blown out by the fan wheel (11) and proportionally supplies it to a respective one of the air outlet channels (13a, 13b).

8. The air-conditioning unit (1) according to claim 7, wherein the separating web (23) extends between the fan wheel (11) and the wall (18) in a direction along the axis of rotation (21) of the fan wheel (11) substantially across a height of the fan wheel (11) as measured along the axis of rotation (21) of the fan wheel (11).

9. The air-conditioning unit (1) according to claim 7, wherein
- the separating web (23) extends in a plane perpendicular to the axis of rotation (21) of the fan wheel (11), and wherein
- the at least two air outlet channels (13a, 13b) are arranged offset in relation to each other axially along the axis of rotation (21) of the fan wheel (11).

10. The air-conditioning unit (1) according to any of the preceding claims, wherein the heat transfer device (10a, 10b) is arranged in the air inlet channel.

11. The air-conditioning unit (1) according to any of the preceding claims, wherein the air outlets (4a, 4b) are arranged on respective different sides of the air-conditioning unit (1).

12. The air-conditioning unit (1) according to any of the preceding claims, wherein at least one of the air outlets (4a, 4b) and/or of the air outlet channels (13a, 13b) can be blocked and/or can be rotated and/or displaced with respect to an installation position of the air-conditioning unit (1).

13. The air-conditioning unit (1) according to any of the preceding claims, wherein the air inlet channel, the first of the at least two air outlet channels (13a, 13b), the second of the at least two air outlet channels (13a, 13b) and/or the air flow dividing device (17) are formed fully or partly from a sound-absorbing material, are surrounded by a sound-absorbing material and/or are coated with a sound-absorbing material.

14. The air-conditioning unit according to any of the preceding claims, if dependent on claim 5 or 6, wherein the wall (18) is formed fully or partly from a sound-absorbing material, is surrounded by a sound-absorbing material and/or is coated with a sound-absorbing material.

15. The air-conditioning unit (1) according to claim 13 or 14, wherein the sound-absorbing material is expanded polypropylene or an open-pored foamed material.

16. The air-conditioning unit (1) according to any of the preceding claims, wherein the air inlet channel and/or at least one of the at least two air outlet channels (13a, 13b) is longer than wide.

17. The air-conditioning unit (1) according to claim 3, wherein the material forming the air outlet channels (13) is shaped such that no line of sight exists between the fan wheel (11) and the surroundings of the air-conditioning unit.

## Revendications

1. Appareil de climatisation (1), présentant
- un canal d'entrée d'air s'étendant en éloignement d'une entrée d'air (3, 3a, 3b),
- un dispositif de transport d'air (11, 16) agencé en aval du canal d'entrée d'air,
- au moins deux canaux de sortie d'air (13a, 13b) menant chacun à une sortie d'air (4a, 4b), et présentant
- un dispositif de transfert de chaleur (10a, 10b) agencé dans le canal d'entrée d'air et/ou dans les canaux de sortie d'air (13a, 13b), à travers lequel l'air conduit à travers le canal d'entrée d'air et/ou à travers les canaux de sortie d'air est guidé,
- les sens des flux d'air sortant par les sorties d'air (4a, 4b) respectives étant orientés de manière différente, et
- l'entrée d'air (3, 3a, 3b) et les sorties d'air (4a, 4b) étant ouverts vers un environnement à l'extérieur d'un espace à climatiser,
**caractérisé en ce que**
- une zone de branchement vers lesdits au moins deux canaux de sortie d'air (13a, 13b) menant chacun à une sortie d'air (4a, 4b) est agencée en aval du dispositif de transport d'air (11),
- un dispositif de division de flux d'air (17) est agencé dans la zone de branchement, et **en ce que**
- le dispositif de division de flux d'air (17) présente un premier flanc (17a) qui délimite un premier (13a) desdits au moins deux canaux de sortie d'air (13a, 13b), et un deuxième flanc (17b) qui délimite un deuxième (13b) desdits au moins deux canaux de sortie d'air (13a, 13b) et qui est adjacent au premier flanc (17a) dans une zone de sommet (17c).

2. Appareil de climatisation (1) selon la revendication 1, au moins l'un des canaux de sortie d'air (13a, 13b) présentant perpendiculairement à un sens d'écoulement principal d'un flux d'air guidé dans celui-ci une superficie de section augmentant en aval.

3. Appareil de climatisation (1) selon l'une des revendications précédentes,
- le dispositif de transport d'air présentant une roue de ventilateur (11),
- le premier flanc (17a) étant agencé dans un sens de marche de la roue de ventilateur (11) derrière la zone de sommet (17c) et étant tourné de manière sensiblement tangentielle vers la roue de ventilateur (11) ou s'étendant de manière parallèle à une tangente virtuelle s'étendant de manière tangentielle par rapport à la roue de ventilateur, et
- le deuxième flanc (17b) étant agencé en s'étendant de manière sensiblement tangentielle en éloignement de la roue de ventilateur (11).

4. Appareil de climatisation (1) selon l'une des revendications précédentes,
- le premier flanc (17a) délimitant le dispositif de division de flux d'air (17) de manière convexe,
- le deuxième flanc (17b) délimitant le dispositif de division de flux d'air (17) de manière concave, et
- la zone de sommet (17c) étant arrondie.

5. Appareil de climatisation (1) selon la revendication 3,
- une paroi périphérique (18) qui entoure en partie la roue de ventilateur (11) étant prévue, et
- une distance entre la paroi périphérique (18) et une arête extérieure radiale de la roue de ventilateur (11) augmentant dans le sens de marche de la roue de ventilateur (11).

6. Appareil de climatisation (1) selon la revendication 3,
- une paroi périphérique (18) qui entoure en partie la roue de ventilateur (11) étant prévue,
- une distance entre la paroi périphérique (18) et une arête extérieure radiale de la roue de ventilateur (11) étant sensiblement constante dans le sens de marche de la roue de ventilateur, et
- une hauteur d'un espace libre se trouvant entre la paroi périphérique (18) et la roue de ventilateur (11), telle que mesurée le long de l'axe de rotation (21) de la roue de ventilateur (11) augmentant dans le sens de marche de la roue de ventilateur (11).

7. Appareil de climatisation (1) selon la revendication 6,
- une barrette de séparation (23) entourant la roue de ventilateur (11) dans une zone angulaire autour de l'axe de rotation (21) de la roue de ventilateur (11) étant prévue dans l'espace libre se trouvant entre la paroi périphérique (18) et la roue de ventilateur (11), et
- la barrette de séparation (23) divisant le flux d'air soufflé par la roue de ventilateur (11) et l'amenant proportionnellement vers l'un des canaux de sortie d'air (13a, 13b) respectif.

8. Appareil de climatisation (1) selon la revendication 7, la barrette de séparation (23) s'étendant entre la roue de ventilateur (11) et la paroi périphérique (18) dans un sens le long de l'axe de rotation (21) de la roue de ventilateur (11) sensiblement sur une hauteur de la roue de ventilateur (11) telle que mesurée le long de l'axe de rotation (21) de la roue de ventilateur (11).

9. Appareil de climatisation (1) selon la revendication 7,
- la barrette de séparation (23) s'étendant dans un plan perpendiculaire à l'axe de rotation (21) de la roue de ventilateur (11), et
- lesdits au moins deux canaux de sortie d'air (13a, 13b) étant agencés décalés les uns par rapport aux autres axialement le long de l'axe de rotation (21) de la roue de ventilateur (11).

10. Appareil de climatisation (1) selon l'une des revendications précédentes, le dispositif de transfert de chaleur (10a, 10b) étant agencé dans le canal d'entrée d'air.

11. Appareil de climatisation (1) selon l'une des revendications précédentes, les sorties d'air (4a, 4b) étant respectivement agencées de différents côtés de l'appareil de climatisation (1).

12. Appareil de climatisation (1) selon l'une des revendications précédentes, au moins l'une des sorties d'air (4a, 4b) et/ou au moins l'un des canaux de sortie d'air (13a, 13b) étant apte à être verrouillé(e) et/ou à être tourné(e) et/ou déplacé(e) par rapport à une position de montage de l'appareil de climatisation (1).

13. Appareil de climatisation (1) selon l'une des revendications précédentes, le canal d'entrée d'air, le premier desdits au moins deux canaux de sortie d'air (13a, 13b), le deuxième desdits au moins deux canaux de sortie d'air (13a, 13b) et/ou le dispositif de division de flux d'air (17) étant entièrement ou en partie réalisé en une matière amortissant le bruit, entouré d'une matière amortissant le bruit et/ou revêtu d'une matière amortissant le bruit.

14. Appareil de climatisation selon l'une des revendications précédentes lorsqu'elle dépend de la revendication 5 ou 6, la paroi périphérique (18) étant entièrement ou en partie réalisée en une matière amortissant le bruit, entourée d'une matière amortissant le bruit et/ou revêtue d'une matière amortissant le bruit.

15. Appareil de climatisation (1) selon la revendication 13 ou 14, la matière amortissant le bruit étant du polypropylène expansé ou une mousse à pores ouverts.

16. Appareil de climatisation (1) selon l'une des revendications précédentes, le canal d'entrée d'air et/ou au moins l'un desdits au moins deux canaux de sortie d'air (13a, 13b) étant plus long que large.

17. Appareil de climatisation (1) selon la revendication 3, la matière formant les canaux de sortie d'air (13) étant formée de telle sorte qu'il n'y a pas de contact visuel entre la roue de ventilateur (11) et l'entourage de l'appareil de climatisation.
